# EUROPEAN PATENT APPLICATION

(11) **EP 4 546 541 A1**
(43) Date of publication of application: **30.04.2025**
(21) Application number: 22955589.1
(22) Date of filing: 05.12.2022
(51) Int. Cl.: H01M 50/446, H01M 50/449, H01M 50/44

(54) **SEPARATOR, PREPARATION METHOD THEREFOR AND SECONDARY BATTERY RELATED THERETO, AND ELECTRICAL DEVICE**

(30) Priority: 15.08.2022 WO PCT/CN2022/112580
(71) Applicant: Contemporary Amperex Technology (Hong Kong) Limited, Hong Kong (HK)
(72) Inventor: XU, Ming, Ningde City, Fujian 352100 (CN); YANG, Jianrui, Ningde City, Fujian 352100 (CN); WEI, Manxiang, Ningde City, Fujian 352100 (CN)
(74) Representative: Ziebig Hengelhaupt Intellectual Property Attorneys Patentanwaltskanzlei PartGmbB
(86) International application number: PCT/CN2022/136684
(87) International publication number: WO 2024/036820

(57) **Abstract**

This application provides a separator, a preparation method thereof, and a secondary battery and electric apparatus related thereto. The separator includes a porous substrate and a coating layer disposed on at least one surface of the porous substrate. The coating layer includes a three-dimensional skeleton structure and a first filler. At least part of the first filler is filled in the three-dimensional skeleton structure. An average particle size of the first filler is less than or equal to 200 nm. This application allows the secondary battery to achieve balance among high energy density, high thermal safety performance, long cycle life, and good kinetic performance.

## Description

### CROSS-REFERENCE TO RELATED APPLICATIONS

This application claims priority to Chinese Patent Application No. PCT/CN2022/112580, filed on August 15, 2022 and entitled "SEPARATOR, PREPARATION METHOD THEREOF, AND SECONDARY BATTERY AND ELECTRIC APPARATUS RELATED THERETO", which is incorporated herein by reference in its entirety.

### TECHNICAL FIELD

This application pertains to the field of battery technologies and specifically relates to a separator, a preparation method thereof, and a secondary battery and electric apparatus related thereto.

### BACKGROUND

In recent years, secondary batteries have been widely used in energy storage power supply systems such as hydroelectric, thermal, wind, and solar power plants, and many other fields including electric tools, electric bicycles, electric motorcycles, electric vehicles, military equipment, and aerospace. With the application and popularization of secondary batteries, safety issues, especially thermal safety issues, of secondary batteries have received increasing attention. However, currently, methods for improving thermal safety performance of secondary batteries are usually unfavorable for balancing energy density and service life of secondary batteries. Therefore, how secondary batteries can achieve balance among high energy density, high thermal safety performance, long cycle life, and good kinetic performance is a key challenge in the design of secondary batteries.

### SUMMARY

This application is intended to provide a separator, a preparation method thereof, and a secondary battery and electric apparatus related thereto, so as to allow the secondary battery to achieve balance among high energy density, high thermal safety performance, long cycle life, and good kinetic performance.

A first aspect of this application provides a separator including a porous substrate and a coating layer disposed on at least one surface of the porous substrate, where the coating layer includes a three-dimensional skeleton structure and a first filler, at least part of the first filler is filled in the three-dimensional skeleton structure, and an average particle size of the first filler is less than or equal to 200 nm.

The inventors of this application have surprisingly found in research that provision of a coating layer that includes a three-dimensional skeleton structure and a first filler with an average particle size of less than or equal to 200 nm on the surface of the porous substrate of the separator can allow the separator to achieve balance among low weight, high heat resistance, and high ionic conductivity, and also allow a secondary battery to achieve balance among high energy density, high thermal safety performance, long cycle life, and good kinetic performance.

In any embodiment of this application, the average particle size of the first filler is 15 nm to 180 nm, optionally 30 nm to 150 nm. The average particle size of the first filler falling within the above range can allow the first filler to have large specific surface area and allow the particle size of the first filler to better match the three-dimensional skeleton structure, thereby allowing the first filler to better interlock with the three-dimensional skeleton structure to provide an integration effect, increasing affinity between the first filler and the three-dimensional skeleton structure, enhancing the heat resistance and ionic conductivity of the separator, and also improving the electrolyte infiltration and retention of the separator.

In any embodiment of this application, the first filler includes at least one of primary particle and secondary particle.

In any embodiment of this application, the first filler includes a combination of primary particle and secondary particle.

In any embodiment of this application, based on a total weight of the first filler, a percentage of the first filler of primary particle morphology is less than a percentage of the first filler of secondary particle morphology.

In any embodiment of this application, based on the total weight of the first filler, the percentage of the first filler of primary particle morphology is less than or equal to 30wt%.

In any embodiment of this application, an average particle size of the first filler of primary particle morphology is 15 nm to 80 nm, optionally 30 nm to 65 nm.

In any embodiment of this application, an average particle size of the first filler of secondary particle morphology is 50 nm to 200 nm, optionally 55 nm to 150 nm.

In any embodiment of this application, BET specific surface area of the first filler is greater than or equal to 25 m²/g, optionally 30 m²/g to 65 m²/g. The specific surface area of the first filler falling within the above range can allow for better affinity between the first filler and the three-dimensional skeleton structure, enhance the heat resistance and ionic conductivity of the separator, and also improve the electrolyte infiltration and retention of the separator.

In any embodiment of this application, based on a total weight of the coating layer, a percentage of the first filler is greater than or equal to 50wt%, optionally 60wt% to 90wt%. The percentage of the first filler falling within the above range can ensure appropriate viscosity of the coating slurry, which is more conducive to coating, and also helps the first filler to interlock with the three-dimensional skeleton structure to provide an integration effect, thereby allowing for a more stable spatial network structure of the coating layer, and in turn further enhancing the heat resistance and ionic conductivity of the separator.

In any embodiment of this application, based on the total weight of the coating layer, a percentage of the three-dimensional skeleton structure is 5wt% to 40wt%, optionally 8wt% to 25wt%. The percentage of the three-dimensional skeleton structure falling within the above range can ensure appropriate viscosity of the coating slurry, which is more conducive to coating, and also helps the three-dimensional skeleton structure to interlock with the first filler to provide an integration effect, thereby allowing for a more stable spatial network structure of the coating layer, and in turn further enhancing the heat resistance, ionic conductivity, electrolyte infiltration and retention, and voltage breakdown resistance of the separator.

In any embodiment of this application, the first filler includes at least one of inorganic particle and organic particle. Optionally, the inorganic particle includes at least one of boehmite, aluminum oxide, barium sulfate, magnesium oxide, magnesium hydroxide, silicon-oxygen compound, tin dioxide, titanium oxide, calcium oxide, zinc oxide, zirconium oxide, yttrium oxide, nickel oxide, hafnium dioxide, cerium oxide, zirconium titanate, barium titanate, and magnesium fluoride, and more optionally, the inorganic particle includes at least one of boehmite, aluminum oxide, barium sulfate, magnesium oxide, silicon-oxygen compound, titanium oxide, zinc oxide, cerium oxide, and barium titanate. Optionally, the organic particle includes at least one of polystyrene particle, polypropylene wax particle, melamine formaldehyde resin particle, phenolic resin particle, polyester particle, polyimide particle, polyamideimide particle, polyaramide particle, polyphenylene sulfide particle, polysulfone particle, polyethersulfone particle, polyether-ether-ketone particle, and polyaryl-ether-ketone particle.

In any embodiment of this application, the first filler includes inorganic particles, where a crystalline form of the inorganic particles includes at least one of θ crystalline form, γ crystalline form, and η crystalline form, and optionally, the crystalline form of the inorganic particles includes at least one of θ crystalline form and γ crystalline form.

In any embodiment of this application, optionally, based on a total weight of the inorganic particles in the first filler, a percentage of the inorganic particles in θ crystalline form is greater than or equal to 50wt%, more optionally 55wt% to 84wt%.

In any embodiment of this application, optionally, based on the total weight of the inorganic particles in the first filler, a percentage of the inorganic particles in γ crystalline form is greater than or equal to 10wt%, more optionally 15wt% to 44wt%.

In any embodiment of this application, optionally, based on the total weight of the inorganic particles in the first filler, a percentage of the inorganic particles in η crystalline form is less than or equal to 5wt%, more optionally less than or equal to 2.5wt%.

In any embodiment of this application, the three-dimensional skeleton structure is formed by a fibrous substance, where morphology of the fibrous substance optionally includes at least one of a rod shape, a tube shape, a bar shape, and a fiber shape.

Selection of the first filler in different crystalline forms helps to enhance at least one of the heat resistance, ionic conductivity, adhesion strength, and electrolyte infiltration and retention of the separator.

In any embodiment of this application, an average diameter of a material constituting the three-dimensional skeleton structure is less than or equal to 40 nm, optionally 10 nm to 35 nm. The average diameter of the material constituting the three-dimensional skeleton structure falling within the above range can further enhance the ionic conductivity and voltage breakdown resistance of the separator, and also help the three-dimensional skeleton structure to interlock with the first filler to provide an integration effect, thereby further enhancing the heat resistance of the separator.

In any embodiment of this application, an average length of the material constituting the three-dimensional skeleton structure is 100 nm to 600 nm, optionally 200 nm to 500 nm. The average length of the material constituting the three-dimensional skeleton structure falling within the above range can further enhance the heat resistance and ionic conductivity of the separator.

In any embodiment of this application, a length-diameter ratio of the material constituting the three-dimensional skeleton structure is 5 to 60, optionally 10 to 30. The length-diameter ratio of the material constituting the three-dimensional skeleton structure falling within the above range can further enhance the ionic conductivity and electrolyte infiltration and retention of the separator.

In any embodiment of this application, a material constituting the three-dimensional skeleton structure includes at least one of an organic material and an inorganic material. Optionally, the organic material includes at least one of nanocellulose, polytetrafluoroethylene nanofiber, and polyamide nanofiber, and optionally, the nanocellulose includes at least one of cellulose nanofibrils, cellulose nanocrystals, and bacterial nanocellulose. Optionally, the inorganic material includes at least one of halloysite nanotubes, nano-rod-shaped aluminum oxide, nano-rod-shaped boehmite, nano-rod-shaped silicon oxide, and glass fiber.

In any embodiment of this application, a material constituting the three-dimensional skeleton structure includes nanocellulose, where the nanocellulose includes at least one of unmodified nanocellulose and modified nanocellulose.

In any embodiment of this application, the modified nanocellulose includes a modified group, where the modified group includes at least one of an amino group, a carboxyl group, an aldehyde group, a sulfonic acid group, a boric acid group, and a phosphoric acid group, and more optionally, includes at least one of a sulfonic acid group, a boric acid group, and a phosphoric acid group.

The nanocellulose having the above specified modified group can effectively enhance the heat resistance of the separator and improve the thermal safety performance of the secondary battery; and can also enhance the adhesion strength between the coating layer and the porous substrate. The nanocellulose having the above specified modified group can also help the nanocellulose to interlock with the first filler to provide an integration effect. This can allow for a more stable spatial network structure of the coating layer, thereby improving the electrolyte infiltration and retention of the separator and enhancing the ionic conductivity and voltage breakdown resistance of the separator. In addition, the presence of the modified group can also reduce the proportion of the hydroxyl group, which can ensure appropriate viscosity of the coating slurry, and is more conducive to coating, thereby improving the production efficiency of the separator and the uniformity of the coating layer.

In any embodiment of this application, optionally, the modified nanocellulose includes a hydroxyl group and a modified group, where a molar ratio of the modified group to the hydroxyl group is 1:4 to 4:1, more optionally 2:3 to 7:3. The molar ratio of the modified group to the hydroxyl group falling within the above range can further enhance the heat resistance, ionic conductivity, and electrolyte infiltration and retention of the separator. In any embodiment of this application, a material constituting the three-dimensional skeleton structure includes a sulfonic acid group, and based on a total weight of the material constituting the three-dimensional skeleton structure, a percentage of element sulfur in the material constituting the three-dimensional skeleton structure is greater than or equal to 0.1wt%, optionally 0.2wt% to 0.5wt%.

In any embodiment of this application, the coating layer further includes a second filler, where at least part of the second filler is embedded into the coating layer, the average particle size of the first filler is denoted as d₁, and an average particle size of the second filler is denoted as d₂, satisfying d₂/d₁ > 1. The second filler has a large average particle size, so as to better play its supporting role in the coating layer, reduce the shrinkage of the first filler, and reduce the amount of a binder, thereby enhancing the heat resistance of the separator; and the second filler having a large particle size also helps to make the coating layer have more pore structures and less water content when a small amount of the second filler is used, thereby further enhancing the ionic conductivity and electrolyte infiltration and retention of the separator, and also improving the cycling performance and/or kinetic performance of the secondary battery.

In any embodiment of this application, the first filler includes at least one of primary particle and secondary particle, an average particle size of the first filler of primary particle morphology is denoted as d₁₁, and an average particle size of the first filler of secondary particle morphology is denoted as d₁₂; where 3.0 ≤ d₂/d₁₁ ≤ 10.0, and optionally, 3.5 ≤ d₂/d₁₁ ≤ 8.0; and/or 1.2 ≤ d₂/d₁₂ ≤ 6.0, and optionally, 2.0 ≤ d₂/d₁₂ ≤ 5.5.

The cooperation between the first filler and the second filler helps to reduce the water content in the coating layer and make the coating layer maintain a stable pore structure during long-term charge and discharge processes, and also enhances the heat resistance of the separator, thereby allowing the secondary battery to achieve better balance among high energy density, high thermal safety performance, long cycle life, and good kinetic performance.

In any embodiment of this application, the second filler has a primary particle morphology.

In any embodiment of this application, the average particle size of the second filler is 120 nm to 350 nm, optionally 150 nm to 300 nm. This allows the second filler to play better supporting role, reduces the water content in the coating layer, makes the coating layer maintain a stable pore structure during long-term charge and discharge processes, and also enhances the heat resistance of the separator.

In any embodiment of this application, BET specific surface area of the second filler is less than or equal to 20 m²/g, optionally 6 m²/g to 15 m²/g. This allows the second filler to play better supporting role, reduces the water content in the coating layer, makes the coating layer maintain a stable pore structure during long-term charge and discharge processes, and also enhances the heat resistance of the separator.

In any embodiment of this application, the second filler includes at least one of inorganic particle and organic particle.

In any embodiment of this application, the second filler includes inorganic particles of primary particle morphology, and a crystalline form of the inorganic particles of primary particle morphology includes at least one of α crystalline form and γ crystalline form, and optionally includes α crystalline form. The second filler in α crystalline form has the advantages of high hardness, good heat resistance, low dielectric constant, high safety, and high true density, thereby further enhancing the heat resistance of the coating layer.

In any embodiment of this application, the second filler includes inorganic particles of primary particle morphology, and a crystalline form of the inorganic particles of primary particle morphology includes α crystalline form, where based on a total weight of the inorganic particles of primary particle morphology in the second filler, a percentage of the inorganic particles in α crystalline form is greater than or equal to 70wt%, optionally 85wt% to 100wt%.

In any embodiment of this application, based on a total weight of the coating layer, a percentage of the second filler is less than or equal to 30wt%, optionally 5wt% to 25wt%. The percentage of the second filler falling within the above range can allow the second filler to play better supporting role, reduce the water content in the coating layer, and make the coating layer maintain a stable pore structure during long-term charge and discharge processes.

In any embodiment of this application, the coating layer further includes a non-granular binder. Optionally, the non-granular binder includes an aqueous-solution-type binder.

In any embodiment of this application, based on the total weight of the coating layer, a percentage of the non-granular binder in the coating layer is less than or equal to 2wt%. The three-dimensional skeleton structure, first filler, and the like in the coating layer in this application can form a stable spatial network structure, thereby allowing the separator to maintain high adhesion while reducing the amount of the binder.

In any embodiment of this application, thickness of the porous substrate is less than or equal to 6 µm, optionally 3 µm to 5 µm. The coating layer in this application can significantly enhance the heat resistance of the separator, thereby allowing for selection of thinner porous substrate, which helps to increase the energy density of the secondary battery.

In any embodiment of this application, thickness of the coating layer is less than or equal to 2 µm, optionally 0.5 µm to 1.5 µm. This is conducive to increasing the energy density of the secondary battery.

In any embodiment of this application, the separator further includes an adhesion layer, where the adhesion layer is disposed on at least part of a surface of the coating layer, and the adhesion layer includes a granular binder. The adhesion layer can not only prevent the coating layer from falling off and improve the safety performance of the secondary battery, but also improve an interface between the separator and an electrode and improve the cycling performance of the secondary battery.

In any embodiment of this application, the granular binder includes at least one of acrylate monomer homopolymer or copolymer, acrylic monomer homopolymer or copolymer, and fluorine-containing olefin monomer homopolymer or copolymer.

In any embodiment of this application, a machine-direction thermal shrinkage rate of the separator at 150°C for 1 h is less than or equal to 6%, optionally 0.5% to 4%.

In any embodiment of this application, a transverse-direction thermal shrinkage rate of the separator at 150°C for 1 h is less than or equal to 6%, optionally 0.5% to 4%.

The separator in this application has a low thermal shrinkage rate in both the transverse and machine directions at the high temperature of 150°C, thereby improving the safety performance of the secondary battery.

In any embodiment of this application, machine-direction tensile strength of the separator is greater than or equal to 2000 kg/cm², optionally 2500 kg/cm² to 4500 kg/cm².

In any embodiment of this application, transverse-direction tensile strength of the separator is greater than or equal to 2000 kg/cm², optionally 2500 kg/cm² to 4500 kg/cm².

The separator in this application has high tensile strength in both the transverse and machine directions, allowing for low probability of damage to the separator when the secondary battery swells, thereby improving the safety performance of the secondary battery.

In any embodiment of this application, infiltration length of the separator is greater than or equal to 30 mm, optionally 30 mm to 80 mm.

In any embodiment of this application, infiltration velocity of the separator is greater than or equal to 3 mm/s, optionally 3 mm/s to 10 mm/s.

The separator in this application has good electrolyte infiltration and retention, thereby enhancing the ionic conductivity of the separator and the extractable capacity of the secondary battery.

In any embodiment of this application, air permeability of the separator is less than or equal to 300 s/100 mL, optionally 100 s/100 mL to 230 s/100 mL. The separator in this application has good air permeability, thereby enhancing the ionic conductivity and the extractable capacity of the secondary battery.

In any embodiment of this application, voltage breakdown strength of the separator is greater than or equal to 1 KV. The separator in this application has high voltage breakdown strength, thereby improving the safety performance of the secondary battery.

A second aspect of this application provides a preparation method of the separator according to the first aspect of this application. The method includes the following steps: providing a porous substrate; mixing a material constituting a three-dimensional skeleton structure and a first filler in a solvent at a predetermined ratio to prepare a coating slurry; and applying the coating slurry on at least one surface of the porous substrate to obtain a separator after drying; where the separator includes the porous substrate and a coating layer disposed on at least one surface of the porous substrate; the coating layer includes the three-dimensional skeleton structure and the first filler; at least part of the first filler is filled in the three-dimensional skeleton structure; and an average particle size of the first filler is less than or equal to 200 nm.

In any embodiment of this application, the coating slurry further includes a second filler, where the average particle size of the first filler is denoted as d₁, and an average particle size of the second filler is denoted as d₂, satisfying d₂/d₁ > 1.

A third aspect of this application provides a secondary battery including the separator according to the first aspect of this application or a separator prepared by using the method according to the second aspect of this application.

A fourth aspect of this application provides an electric apparatus including the secondary battery according to the third aspect of this application.

The separator in this application can allow the secondary battery to achieve balance among high energy density, high thermal safety performance, as well as good cycling performance and kinetic performance. The electric apparatus in this application includes the secondary battery provided in this application and therefore has at least the same advantages as the secondary battery.

### BRIEF DESCRIPTION OF DRAWINGS

To describe the technical solutions of embodiments of this application more clearly, the following briefly describes the accompanying drawings for describing the embodiments of this application. Apparently, the accompanying drawings in the following descriptions show only some embodiments of this application, and persons of ordinary skill in the art may still derive other drawings from these accompanying drawings without creative efforts.
FIG. 1 is a schematic diagram of an embodiment of a secondary battery in this application.
FIG. 2 is a schematic exploded view of the embodiment of the secondary battery in FIG. 1.
FIG. 3 is a schematic diagram of an embodiment of a battery module in this application.
FIG. 4 is a schematic diagram of an embodiment of a battery pack in this application.
FIG. 5 is a schematic exploded view of the embodiment of the battery pack shown in FIG. 4.
FIG. 6 is a schematic diagram of an embodiment of an electric apparatus using a secondary battery in this application as a power source.

In the accompanying drawings, the figures are not necessarily drawn to scale. Reference signs are as follows: 1. battery pack, 2. upper box body, 3. lower box body, 4. battery module, 5. secondary battery, 51. housing, 52. electrode assembly, and 53. cover plate.

### DESCRIPTION OF EMBODIMENTS

The following specifically discloses in detail embodiments of the separator, preparation method thereof, and secondary battery and electric apparatus related thereto of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combinations of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions, and such technical solutions should be considered to be included in the disclosure of this application.

Unless otherwise specified, all the technical features and optional technical features of this application can be combined with each other to form new technical solutions, and such technical solutions should be considered to be included in the disclosure of this application.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Unless otherwise specified, in this application, the terms "first", "second", and the like are intended to distinguish between different objects rather than to indicate a particular order or relative importance.

Unless otherwise specified, the terms used in this application have well known meanings as commonly understood by persons skilled in the art.

Unless otherwise specified, numerical values of parameters mentioned in this application may be measured by using various measurement methods commonly used in the art, for example, they may be measured by using the methods provided in the embodiments of this application.

Typically, a secondary battery includes an electrode assembly and an electrolyte. The electrode assembly includes a positive electrode plate, a negative electrode plate, and a separator. The separator is disposed between the positive electrode plate and the negative electrode plate, mainly to prevent short circuit between the positive electrode and the negative electrode and allow active ions to pass through freely to form a closed loop.

With the application and popularization of secondary batteries, increasingly high requirements are imposed on energy density, service life, and kinetic performance of secondary batteries. Thinning of separators is an effective measure for increasing the energy density of secondary batteries. A separator used in a commercialized secondary battery is typically a polyolefin porous film, such as a polyethylene porous film, a polypropylene porous film, or a polypropylene/polyethylene/polypropylene three-layer composite film, with a melting point of 130°C to 160°C. As a result, a thinned separator has deteriorated heat resistance, and will experience significant thermal shrinkage when heated, causing an internal short circuit due to direct contact of a positive electrode and a negative electrode inside the battery, thereby increasing safety hazards of the secondary battery.

To solve the above problem, a current measure is mainly to apply a heat-resistant inorganic ceramic layer on the polyolefin porous film, which can increase the mechanical strength of the separator, reduce the degree of shrinkage of the separator when heated, and reduce the risk of short circuit between the positive electrode and negative electrode inside the battery. However, commercially available inorganic ceramic particles have large particle size, which increases the overall thickness of the separator, and consequently cannot achieve desired energy density of the secondary battery. This is particularly unfavorable for improvement of range in the field of traction batteries. In addition, the enhancement effect of commercially available inorganic ceramic particles on the heat resistance of the separator is also limited. Nanocrystallization of inorganic ceramic particles can reduce the thickness of a coating layer and alleviate the adverse effects on the energy density of the secondary battery. However, nanocrystallized inorganic ceramic particles are likely to block the pores in the polyolefin porous film, resulting in deteriorated extractable capacity and kinetic performance of the secondary battery. In addition, since the nanocrystallized inorganic ceramic particles have high specific surface area and contact mode of point contact between particles, a large amount of binder is required to ensure adhesion between the particles. However, large amount of binder is likely to cause pore blocking, thus unfavorable for the kinetic performance of the secondary battery.

Therefore, it is often difficult for separators in the prior art to make secondary batteries achieve balance among high energy density, high thermal safety performance, long cycle life, and good kinetic performance.

The inventors of this application have surprisingly found in research that provision of a coating layer that includes a three-dimensional skeleton structure and a first filler with an average particle size of less than or equal to 200 nm on a surface of a porous substrate of a separator can allow the separator to achieve balance among low weight, high heat resistance, and high ionic conductivity, and also allow a secondary battery to achieve balance among high energy density, high thermal safety performance, long cycle life, and good kinetic performance.

### Separator

Specifically, a first aspect of the embodiments of this application provides a separator including a porous substrate and a coating layer disposed on at least one surface of the porous substrate, where the coating layer includes a three-dimensional skeleton structure and a first filler, at least part of the first filler is filled in the three-dimensional skeleton structure, and an average particle size of the first filler is less than or equal to 200 nm. In this application, the "three-dimensional skeleton structure" is a structure with a three-dimensional spatial shape and certain porosity, and may be formed by interlocking materials constituting the three-dimensional skeleton structure.

The first filler has an average particle size of less than or equal to 200 nm, and therefore has advantages of large specific surface area and good affinity with the three-dimensional skeleton structure. This helps the first filler to form a more stable spatial network structure with the three-dimensional skeleton structure, thereby not only increasing the ionic conductivity of the separator, but also enhancing the heat resistance of the separator.

At least part of the first filler is filled in the three-dimensional skeleton structure, which helps the first filler and the three-dimensional skeleton structure to create a nested effect, thereby not only enhancing the heat resistance of the separator, reducing the degree of shrinkage of the separator when heated, reducing the risk of short circuit between a positive electrode and a negative electrode, and allowing a secondary battery to have high thermal safety performance, but also allowing for high adhesion strength maintained between the coating layer and the porous substrate, and preventing the first filler from falling off in long-term charge and discharge processes of the secondary battery. In addition, since at least part of the first filler is filled in the three-dimensional skeleton structure, more contact sites are present between the first filler and the three-dimensional skeleton structure, which can reduce the amount of a binder used in the coating layer, thereby effectively reducing the risk of pore blocking by the binder, and further improving the cycling performance and kinetic performance of the secondary battery.

The coating layer in this application has high heat resistance, so that thickness of the coating layer can be reduced (for example, the thickness of the coating layer can be less than or equal to 2 µm), shortening the transport distance of active ions, and the secondary battery can also achieve balance among high energy density and good cycling performance and kinetic performance. In addition, the coating layer in this application has high heat resistance, so that a thinner porous substrate can be selected, thereby further increasing the energy density of the secondary battery.

In some embodiments, at least part of the first filler is filled in the three-dimensional skeleton structure; other parts of the first filler may be located on a surface of the three-dimensional skeleton structure and/or an interface between the three-dimensional skeleton structure and the porous substrate; and at an interface position between the three-dimensional skeleton structure and the porous substrate, a small part of the first filler may also be embedded into the porous substrate, for example, in a winding process of an electrode assembly, a small part of the first filler at an interface position is embedded into the matrix and/or pores of the porous substrate due to the action of an external pressure.

### [Three-dimensional skeleton structure]

In some embodiments, the three-dimensional skeleton structure may be formed by a fibrous substance, where morphology of the fibrous substance optionally includes at least one of a rod shape, a tube shape (for example, a hollow tube shape), a bar shape, and a fiber shape. The material with appropriate shape helps the three-dimensional skeleton structure to form a stable spatial network structure with the first filler, thereby further enhancing the heat resistance, ionic conductivity, and electrolyte infiltration and retention of the separator of the separator. In this application, the "fibrous substance" refers to a material with a length-diameter ratio of above 5.

In some embodiments, a material constituting the three-dimensional skeleton structure includes at least one of an organic material and an inorganic material.

Optionally, the organic material includes at least one of nanocellulose, polytetrafluoroethylene nanofiber, and polyamide nanofiber. Optionally, the inorganic material includes at least one of halloysite nanotubes, nano-rod-shaped aluminum oxide, nano-rod-shaped boehmite, nano-rod-shaped silicon oxide, and glass fiber.

In some embodiments, a material constituting the three-dimensional skeleton structure may include nanocellulose. Optionally, the nanocellulose includes at least one of cellulose nanofibrils (Cellulose nanofibrils, CNF, also known as nanofibrillated cellulose or microfibrillated cellulose), cellulose nanocrystals (Cellulose nanocrystals, CNC, also known as cellulose nanocrystallines or nanocrystalline cellulose), and bacterial nanocellulose (Bacterial nanocellulose, BNC, also known as bacterial cellulose or microbial cellulose).

Nanocellulose is a general term for cellulose with a size in nanoscale (for example, within 100 nm) in any dimension, which has both the characteristics of cellulose and the characteristics of nanoparticles. Nanocellulose may be a high molecular nanomaterial extracted from natural sources such as wood and cotton through one or more methods such as chemical, physical, or biological methods, has advantages such as wide availability, low costs, biodegradability, high modulus, and high specific surface area, and therefore is an excellent substitute for traditional petrochemical resources, effectively alleviating problems such as environmental pollution and shortage in petrochemical resources. Nanocellulose also has good high-temperature resistance and small volume change when heated, thereby enhancing the heat resistance of the separator. Meanwhile, compared with conventional inorganic ceramic particles, nanocellulose has a lower density, thereby reducing the weight of the secondary battery and increasing the weight energy density of the secondary battery. In addition, the three-dimensional skeleton structure formed by nanocellulose may also have tiny nanopores, preventing current leakage, thereby allowing the separator to achieve balance between good electrolyte infiltration and retention and good voltage breakdown resistance.

In some embodiments, the nanocellulose may include at least one of unmodified nanocellulose (also known as hydroxy nanocellulose) and modified nanocellulose, and optionally, is modified nanocellulose.

Modified nanocellulose is nanocellulose that includes both hydroxyl group and modified group. In some embodiments, the modified nanocellulose includes a modified group, where the modified group includes at least one of an amino group, a carboxyl group, an aldehyde group, a sulfonic acid group, a boric acid group, and a phosphoric acid group, and optionally, includes at least one of a sulfonic acid group, a boric acid group, and a phosphoric acid group.

The inventors have found in further research that the nanocellulose having the above specified modified group can effectively enhance the heat resistance of the separator and improve the thermal safety performance of the secondary battery; and can also enhance the adhesion strength between the coating layer and the porous substrate. The nanocellulose having the above specified modified group can also help the nanocellulose to interlock with the first filler to provide an integration effect. This can allow for a more stable spatial network structure of the coating layer, thereby improving the electrolyte infiltration and retention of the separator and enhancing the ionic conductivity and voltage breakdown resistance of the separator. In addition, the presence of the modified group can also reduce the proportion of the hydroxyl group, which can ensure appropriate viscosity of the coating slurry, and is more conducive to coating, thereby improving the production efficiency of the separator and the uniformity of the coating layer.

In some embodiments, a molar ratio of the modified group to the hydroxyl group may be 1:4 to 4: 1, optionally 2:3 to 7:3. The molar ratio of the modified group to the hydroxyl group falling within the above range can further enhance the heat resistance, ionic conductivity, and electrolyte infiltration and retention of the separator. In addition, the following situation can effectively avoided: when the molar ratio of the modified group to the hydroxyl group is excessively small, further improvement effect of the modified group on the heat resistance and ionic conductivity of the separator may not be obvious; and when the molar ratio of the modified group to the hydroxyl group is excessively large, the electrolyte infiltration and retention of the separator may be deteriorated, which may in turn affect the cycling performance and safety performance of the secondary battery, and the heat resistance of the separator may also be decreased, which may in turn further affect the improvement effect on the thermal safety performance of the secondary battery.

The type of the modified group in nanocellulose can be determined by using infrared spectroscopy method. For example, infrared spectrum of the material can be tested to determine characteristic peaks that the material contains, so as to determine the type of the modified group. Specifically, infrared spectroscopy method can be performed on the material by using instruments and methods known in the art, the test is performed by using an infrared spectrometer (for example, an IS10 Fourier transform infrared spectrometer from Nicolet of the United States) according to general rules of GB/T 6040-2019 infrared spectroscopy method.

In some embodiments, the material constituting the three-dimensional skeleton structure includes a sulfonic acid group, and based on a total weight of the material constituting the three-dimensional skeleton structure, a percentage of element sulfur in the material constituting the three-dimensional skeleton structure is greater than or equal to 0.1wt%, optionally 0.2wt% to 0.5wt%. Optionally, a material constituting the three-dimensional skeleton structure includes nanocellulose.

The percentage of element sulfur in the material constituting the three-dimensional skeleton structure can be obtained in the following method: after drying the material constituting the three-dimensional skeleton structure, grinding it in a mortar (for example, an agate mortar) for 30 min, and then performing test using an X-ray diffractometer (for example, Miniflex600-C) to obtain the percentage of element sulfur. During test, a Cu target material and Ni filter can be used, with a tube pressure of 40 KV, a tube current of 15 mA, and a continuous scanning range of 5°-80°.

In some embodiments, an average diameter of a material constituting the three-dimensional skeleton structure may be less than or equal to 40 nm, optionally 10 nm to 35 nm. The average diameter of the material constituting the three-dimensional skeleton structure falling within the above range can further enhance the ionic conductivity and voltage breakdown resistance of the separator, and also help the three-dimensional skeleton structure to interlock with the first filler to provide an integration effect, thereby further enhancing the heat resistance of the separator. In addition, the following situation can effectively avoided: Excessively large average diameter of the material constituting the three-dimensional skeleton structure leads to insufficient interweaving effect and large pores of the three-dimensional skeleton structure formed, which may result in insufficient heat resistance, voltage breakdown resistance of the separator, and is also unfavorable for the material to interlock with the first filler to provide an integration effect. In addition, during the drying process of the coating layer, the three-dimensional skeleton structure is prone to collapse due to the lack of support from the first filler, and thus easily comes into direct contact with the porous substrate and causing pore blocking, which may affect the ionic conductivity of the separator.

In some embodiments, an average length of the material constituting the three-dimensional skeleton structure may be 100 nm to 600 nm, optionally 200 nm to 500 nm. The average length of the material constituting the three-dimensional skeleton structure falling within the above range can further enhance the heat resistance and ionic conductivity of the separator. In addition, the following situation can effectively avoided: Excessively short average length of the material constituting the three-dimensional skeleton structure leads to poor interlocking effect with the first filler, deteriorated heat resistance of the coating layer, and a result that during the drying process of the coating layer, the three-dimensional skeleton structure is prone to collapse due to the lack of support from the first filler, which easily leads to pore blocking, hinders ion transport and moisture discharge, and in turn may affect the thermal safety performance, cycling performance, and kinetic performance of the secondary battery. Excessively long average length of the material constituting the three-dimensional skeleton structure leads to high viscosity and poor fluidity of the coating slurry, which may affect the applying of the coating slurry, and in turn affect the quality of the coating layer, for example, may affect the heat resistance and ionic conductivity of the separator.

In some embodiments, a length-diameter ratio of the material constituting the three-dimensional skeleton structure may be 5 to 60, optionally 10 to 30. The length-diameter ratio of the material constituting the three-dimensional skeleton structure falling within the above range can further enhance the ionic conductivity and electrolyte infiltration and retention of the separator. In addition, the following situation can effectively avoided: Excessively small length-diameter ratio of the material constituting the three-dimensional skeleton structure leads to poor interlocking effect with the first filler, deteriorated heat resistance of the coating layer, and a result that during the drying process of the coating layer, the three-dimensional skeleton structure is prone to collapse due to the lack of support from the first filler, which easily leads to pore blocking, hinders ion transport and moisture discharge, and in turn may affect the thermal safety performance, cycling performance, and kinetic performance of the secondary battery. Excessively large length-diameter ratio of the material constituting the three-dimensional skeleton structure leads to small pores of the three-dimensional skeleton structure formed, which may lead to decreased ionic conductivity of the separator.

The average length and average diameter of the material constituting the three-dimensional skeleton structure can be determined in the following method: randomly selecting a region on the separator to obtain a sample with a size of 3.6 mm × 3.6 mm through cutting, measuring the micro-morphology and structure of the coating layer in the sample using a scanning electron microscope (for example, ZEISS Sigma 300) to obtain an SEM image, where high vacuum mode is selected, working voltage is 3 kV, and magnification is 30,000 times; based on the obtained SEM image, selecting multiple (for example, more than 5) test regions for length statistics, where the size of each test region is 0.5 µm × 0.5 µm, and then taking an average value of lengths obtained from the test regions as the average length of the material constituting the three-dimensional skeleton structure; and based on the obtained SEM image, selecting multiple (for example, more than 5) test regions for diameter statistics using Nano Measurer particle size distribution statistical software, where the size of each test region is 0.5 µm × 0.5 µm, and then taking an average value of diameters obtained from the test regions as the average diameter of the material constituting the three-dimensional skeleton structure.

In some embodiments, based on a total weight of the coating layer, a percentage of the three-dimensional skeleton structure is 5wt% to 40wt%, optionally 8wt% to 25wt% or 10wt% to 25wt%. The material constituting the three-dimensional skeleton structure has a large specific surface area, so that in a same mass, the resulting coating layer has a larger specific surface area and more pores, which leads to poor heat resistance of the separator. Meanwhile, the material constituting the three-dimensional skeleton structure (for example, nanocellulose) has strong hydrogen bond, so that higher percentage thereof results in higher viscosity of the coating slurry, which is unfavorable for achieving thin coating and not conducive to commercial production. The percentage of the three-dimensional skeleton structure falling within the above range can ensure appropriate viscosity of the coating slurry, which is more conducive to coating, and also helps the three-dimensional skeleton structure to interlock with the first filler to provide an integration effect, thereby allowing for a more stable spatial network structure of the coating layer, and in turn further enhancing the heat resistance, ionic conductivity, electrolyte infiltration and retention, and voltage breakdown resistance of the separator.

### [First filler]

In some embodiments, an average particle size of the first filler is 15 nm to 180 nm, optionally 20 nm to 170 nm, 25 nm to 160 nm, 30 nm to 150 nm, 40 nm to 140 nm, or 50 nm to 135 nm. The average particle size of the first filler falling within the above range can allow the first filler to have large specific surface area and allow the particle size of the first filler to better match the three-dimensional skeleton structure, thereby allowing the first filler to better interlock with the three-dimensional skeleton structure to provide an integration effect, increasing affinity between the first filler and the three-dimensional skeleton structure, enhancing the heat resistance and ionic conductivity of the separator, and also improving the electrolyte infiltration and retention of the separator.

In some embodiments, the first filler includes at least one of primary particle and secondary particle, and optionally, the first filler includes a combination of primary particle and secondary particle. The first filler of primary particle morphology helps to reduce the water content in the coating layer and enhance the ionic conductivity of the coating layer, thereby better improving the cycling performance of the secondary battery. The secondary filler of secondary particle morphology can better interlock with the three-dimensional skeleton structure to provide an integration effect, thereby allowing for a more stable spatial network structure of the coating layer, and in turn further enhancing the heat resistance of the separator.

In some embodiments, the first filler includes a combination of primary particle and secondary particle, and based on a total weight of the first filler, a percentage of the first filler of primary particle morphology is less than a percentage of the first filler of secondary particle morphology.

In some embodiments, the first filler includes a combination of primary particle and secondary particle, and based on the total weight of the first filler, the percentage of the first filler of primary particle morphology is less than or equal to 30wt%, optionally 8wt% to 30wt%, 8wt% to 28wt%, 10wt% to 30wt%, 10wt% to 28wt%, 12wt% to 30wt%, 12wt% to 28wt%, 15wt% to 30wt%, 15wt% to 28wt%, 17.5wt% to 30wt%, or 17.5wt% to 28wt%.

In some embodiments, an average particle size of the first filler of primary particle morphology is 15 nm to 95 nm, optionally 15 nm to 80 nm, 20 nm to 80 nm, 30 nm to 75 nm, 35 nm to 75 nm, 35 nm to 70 nm, 30 nm to 70 nm, or 30 nm to 65 nm.

In some embodiments, an average particle size of the first filler of secondary particle morphology is 50 nm to 200 nm, optionally 50 nm to 180 nm, 50 nm to 150 nm, 50 nm to 135 nm, 50 nm to 120 nm, 55 nm to 180 nm, 55 nm to 150 nm, 55 nm to 135 nm, 55 nm to 120 nm, 65 nm to 180 nm, 65 nm to 150 nm, 65 nm to 135 nm, or 65 nm to 120 nm.

In some embodiments, BET specific surface area of the first filler is greater than or equal to 25 m²/g, optionally 30 m²/g to 80 m²/g or 30 m²/g to 65 m²/g. The specific surface area of the first filler falling within the above range can allow the first filler to have better affinity with the three-dimensional skeleton structure and interlock with the three-dimensional skeleton structure to provide an integration effect, thereby enhancing the heat resistance and ionic conductivity of the separator, and also improving the electrolyte infiltration and retention of the separator.

In some embodiments, the first filler includes at least one of inorganic particle and organic particle, and optionally includes inorganic particle or a combination of inorganic particle and organic particle. The inorganic particle has high hardness and high thermal stability, and is less prone to decomposition. In addition, the inorganic particle typically has a hydroxyl group on the surface, and therefore easily constructs a stable spatial network structure with a material constituting the three-dimensional skeleton structure (for example, nanocellulose). The organic particle has good thermal stability and is less prone to decomposition. In addition, when the internal temperature of the secondary battery reaches a melting point of the organic particle due to overcharging, thermal abuse, and the like, the organic particle can melt and be drawn into micropores of the porous substrate under the action of capillarity, effectively blocking pores and breaking continuity, and therefore conducive to improving the safety performance of the secondary battery.

Optionally, the inorganic particle includes at least one of boehmite (γ-AlOOH), aluminum oxide (Al₂O₃), barium sulfate (BaSO₄), magnesium oxide (MgO), magnesium hydroxide (Mg(OH)₂), silicon-oxygen compound SiOₓ (0 < x ≤ 2), tin dioxide (SnO₂), titanium oxide (TiO₂), calcium oxide (CaO), zinc oxide (ZnO), zirconium oxide (ZrO₂), yttrium oxide (Y₂O₃), nickel oxide (NiO), hafnium dioxide (HfO₂), cerium oxide (CeO₂), zirconium titanate (ZrTiO₃), barium titanate (BaTiO₃), and magnesium fluoride (MgF₂). More optionally, the inorganic particle includes at least one of boehmite (γ-AlOOH), aluminum oxide (Al₂O₃), barium sulfate (BaSO₄), magnesium oxide (MgO), silicon-oxygen compound SiOₓ (0 < x ≤ 2), titanium oxide (TiO₂), zinc oxide (ZnO), cerium oxide (CeO₂), and barium titanate (BaTiO₃).

Optionally, the organic particle includes at least one of polystyrene particle, polypropylene wax particle, melamine formaldehyde resin particle, phenolic resin particle, polyester particle, polyimide particle, polyamideimide particle, polyaramide particle, polyphenylene sulfide particle, polysulfone particle, polyethersulfone particle, polyether-ether-ketone particle, and polyaryl-ether-ketone particle.

In some embodiments, the first filler includes inorganic particles, where a crystalline form of the inorganic particles includes at least one of θ crystalline form, γ crystalline form, and η crystalline form. Optionally, the crystalline form of the inorganic particles includes at least one of θ crystalline form and γ crystalline form.

The inorganic particles in θ crystalline form exhibit diffraction peaks at 2θ of 36.68°±0.2° and 31.21°±0.2° in an X-ray diffraction pattern determined using an X-ray diffractometer. In some embodiments, based on a total weight of the inorganic particles in the first filler, a percentage of the inorganic particles in θ crystalline form in the first filler is greater than or equal to 50wt%, optionally 55wt% to 84wt%.

The inorganic particles in γ crystalline form exhibit diffraction peaks at 2θ of 66.95°±0.2° and 45.91°±0.2° in an X-ray diffraction pattern determined using an X-ray diffractometer. In some embodiments, based on the total weight of the inorganic particles in the first filler, a percentage of the inorganic particles in γ crystalline form in the first filler is greater than or equal to 10wt%, optionally 15wt% to 44wt%.

The inorganic particles in η crystalline form exhibit diffraction peaks at 2θ of 31.89°±0.2° and 19.37°±0.2° in an X-ray diffraction pattern determined using an X-ray diffractometer. In some embodiments, based on the total weight of the inorganic particles in the first filler, a percentage of the inorganic particles in η crystalline form in the first filler is less than or equal to 5wt%, optionally less than or equal to 2.5wt%, and more optionally less than or equal to 1.5wt%.

The inorganic particles in θ crystalline form have moderate specific surface area and hardness, and therefore can better enhance both the heat resistance and ionic conductivity of the separator. The inorganic particles in γ crystalline form and η crystalline form have the advantage of large specific surface area.

Selection of the first filler in different crystalline forms helps to enhance at least one of the heat resistance, ionic conductivity, adhesion strength, and electrolyte infiltration and retention of the separator.

In some embodiments, the first filler may include inorganic particles, where a crystalline form of the inorganic particles includes θ crystalline form, γ crystalline form, and η crystalline form; and in the first filler, based on a total weight of the inorganic particles in the first filler, a percentage of the inorganic particles in θ crystalline form may be 55wt% to 84wt%, a percentage of the inorganic particles in γ crystalline form may be 15wt% to 44wt%, and a percentage of the inorganic particles in η crystalline form may be less than or equal to 2.5wt%.

An X-ray diffraction pattern of the inorganic particles can be obtained in the following method: after drying the inorganic particles, grinding them in a mortar (for example, an agate mortar) for 30 min, and then performing test using an X-ray diffractometer (for example, Miniflex600-C) to obtain an X-ray diffraction pattern. During test, a Cu target material and Ni filter can be used, with a tube pressure of 40 KV, a tube current of 15 mA, and a continuous scanning range of 5°-80°.

In some embodiments, the first filler may include inorganic particles, and the inorganic particles can be prepared in the following method: performing an oxidation reaction on a precursor solution of inorganic particles through high-pressure sputtering, then heating at 600°C to 900°C (for example, 1 hour to 3 hours) to create inorganic particles of primary particle morphology, and then performing drying and fixing at 150°C to 250°C (for example, 30 minutes to 60 minutes) to obtain inorganic particles of secondary particle morphology (formed by assembly of primary particles).

In some embodiments, based on a total weight of the coating layer, a percentage of the first filler is greater than or equal to 50wt%, optionally 50wt% to 90wt%, 55wt% to 90wt%, 60wt% to 90wt%, 50wt% to 85wt%, 55wt% to 85wt%, 60wt% to 85wt%, 50wt% to 82.5wt%, 55wt% to 82.5wt%, or 60wt% to 82.5wt%. The percentage of the first filler falling within the above range can ensure appropriate viscosity of the coating slurry, which is more conducive to coating, and also helps the first filler to interlock with the three-dimensional skeleton structure to provide an integration effect, thereby allowing for a more stable spatial network structure of the coating layer, and in turn further enhancing the heat resistance and ionic conductivity of the separator.

### [Second filler]

In some embodiments, the coating layer further includes a second filler, where at least part of the second filler is embedded into the coating layer. In addition, it is also possible that part of the second filler protrudes from a surface of the coating layer.

In some embodiments, the coating layer includes the first filler and a second filler, where the average particle size of the first filler is denoted as d₁, and an average particle size of the second filler is denoted as d₂, satisfying d₂/d₁ > 1. The second filler has a large average particle size, so as to better play its supporting role in the coating layer, reduce the shrinkage of the first filler, and reduce the amount of a binder, thereby enhancing the heat resistance of the separator; and the second filler having a large particle size also helps to make the coating layer have more pore structures and less water content when a small amount of the second filler is used, thereby further enhancing the ionic conductivity and electrolyte infiltration and retention of the separator, and also improving the cycling performance and/or kinetic performance of the secondary battery.

The first filler includes at least one of primary particle and secondary particle, an average particle size of the first filler of primary particle morphology is denoted as d₁₁, and an average particle size of the first filler of secondary particle morphology is denoted as d₁₂.

In some embodiments, 3.0 ≤ d₂/d₁₁ ≤ 10.0, and optionally, 3.5 ≤ d₂/d₁₁ ≤ 8.0, or 3.5 ≤ d₂/d₁₁ ≤ 6.0. The cooperation between the first filler and the second filler helps to reduce the water content in the coating layer and make the coating layer maintain a stable pore structure during long-term charge and discharge processes, and also enhances the heat resistance of the separator, thereby allowing the secondary battery to achieve better balance among high energy density, high thermal safety performance, long cycle life, and good kinetic performance.

In some embodiments, 1.2 ≤ d₂/d₁₂ ≤ 6.0, and optionally, 2.0 ≤ d₂/d₁₂ ≤ 5.5, 2.0 ≤ d₂/d₁₂ ≤ 5.0, or 2.0 ≤ d₂/d₁₂ ≤ 4.5. The cooperation between the first filler and the second filler helps to reduce the water content in the coating layer and make the coating layer maintain a stable pore structure during long-term charge and discharge processes, and also enhances the heat resistance of the separator, thereby allowing the secondary battery to achieve better balance among high energy density, high thermal safety performance, long cycle life, and good kinetic performance.

In some embodiments, the average particle size d₂ of the second filler is 120 nm to 350 nm, optionally 150 nm to 300 nm. This allows the second filler to play better supporting role, reduces the water content in the coating layer, makes the coating layer maintain a stable pore structure during long-term charge and discharge processes, and also enhances the heat resistance of the separator.

In some embodiments, BET specific surface area of the second filler is less than or equal to 20 m²/g, optionally 6 m²/g to 15 m²/g. This allows the second filler to play better supporting role, reduces the water content in the coating layer, makes the coating layer maintain a stable pore structure during long-term charge and discharge processes, and also enhances the heat resistance of the separator.

In some embodiments, the second filler includes at least one of inorganic particle and organic particle.

In some embodiments, the inorganic particle may include at least one of inorganic particle with a dielectric constant above 5, inorganic particle with ionic conductivity but not storing ions, and inorganic particle capable of electrochemical reactions.

Optionally, the inorganic particle with a dielectric constant above 5 includes at least one of boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, Pb(Zr,Ti)O₃ (PZT for short), Pb₁₋ₘLaₘZr₁₋ₙTiₙO₃ (PLZT for short, where 0 < m < 1, and 0 < n < 1), Pb(Mg₃Nb_{2/3})O₃-PbTiO₃ (PMN-PT for short), and their respective modified inorganic particles. Optionally, a modification method for the inorganic particles may be chemical modification and/or physical modification. The chemical modification method includes coupling agent modification (for example, using a silane coupling agent, a titanate coupling agent, and the like), surfactant modification, polymer graft modification, and the like. The physical modification method may include mechanical force dispersion, ultrasonic dispersion, high-energy treatment, and the like. Through modification treatment, the agglomeration of inorganic particles can be reduced, thereby allowing the coating layer to have a more stable and uniform spatial network structure. In addition, selection of a coupling agent, surfactant, or polymer with a specific functional group for modifying the inorganic particles also helps to improve the electrolyte infiltration and retention of the coating layer and improve the adhesion of the coating layer to the porous substrate.

Optionally, the inorganic particle with ionic conductivity but not storing ions includes at least one of Li₃PO₄, lithium titanium phosphate Liₓ₁Ti_{y1}(PO₄)₃, lithium aluminum titanium phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3}, and P₂S₅ type glass Liₓ₈P_{y8}S_{z4}, where 0 < x1 < 2, 0 < y1 < 3, 0 < x2 < 2, 0 < y2 < 1, 0 < z1 < 3, 0 < x3 < 4, 0 < y3 < 13, 0 < x4 < 2, 0 < y4 < 3, 0 < x5 < 4, 0 < y5 < 1, 0 < z2 < 1, 0 < w < 5, 0 < x6 < 4, 0 < y6 < 2, 0 < x7 < 3, 0 < y7 < 2, 0 < z3 < 4, 0 < x8 < 3, 0 < y8 < 3, and 0 < z4 < 7. In this way, the ionic conductivity of the separator can be further enhanced.

Optionally, the inorganic particle capable of electrochemical reactions includes at least one of lithium-containing transition metal oxide, lithium-containing phosphate, a carbon-based material, a silicon-based material, a tin-based material, and a lithium titanium compound.

In some embodiments, the organic particle includes but is not limited to at least one of polyethylene particle, polypropylene particle, cellulose, cellulose modifier (for example, carboxymethyl cellulose), melamine resin particle, phenolic resin particle, polyester particle (for example, polyethylene terephthalate, polyethylene naphthalate, and polybutylene terephthalate), organosilicon resin particle, polyimide particle, polyamideimide particle, polyaramide particle, polyphenylene sulfide particle, polysulfone particle, polyethersulfone particle, polyether-ether-ketone particle, polyaryl-ether-ketone particle, butyl acrylate-ethyl methacrylate copolymer (for example, crosslinking copolymer of butyl acrylate and ethyl methacrylate).

In some embodiments, the second filler has a primary particle morphology.

In some embodiments, the second filler includes inorganic particles of primary particle morphology, and a crystalline form of the inorganic particles of primary particle morphology includes at least one of α crystalline form and γ crystalline form, and optionally includes α crystalline form. The second filler in α crystalline form has the advantages of high hardness, good heat resistance, low dielectric constant, high safety, and high true density, thereby further enhancing the heat resistance of the coating layer.

In some embodiments, the second filler includes inorganic particles of primary particle morphology, and a crystalline form of the inorganic particles of primary particle morphology includes α crystalline form, where based on a total weight of the inorganic particles of primary particle morphology in the second filler, a percentage of the inorganic particles in α crystalline form is greater than or equal to 70wt%, optionally 75wt% to 100wt%, 85wt% to 100wt%, or 95wt% to 100wt%.

The inorganic particles in α crystalline form exhibit diffraction peaks at 2θ of 57.48°±0.2° and 43.34°±0.2° in an X-ray diffraction pattern determined using an X-ray diffractometer.

In some embodiments, based on a total weight of the coating layer, a percentage of the second filler is less than or equal to 30wt%, optionally 5wt% to 25wt%, 6wt% to 22wt%, 6wt% to 20wt%, or 8wt% to 18wt%. The percentage of the second filler falling within the above range can allow the second filler to play better supporting role, reduce the water content in the coating layer, and make the coating layer maintain a stable pore structure during long-term charge and discharge processes.

In some embodiments, the coating layer may further include a non-granular binder. The non-granular binder is not limited to any particular type in this application, and may be any well-known material with good adhesion. Optionally, the non-granular binder includes an aqueous-solution-type binder which has the advantages of good thermodynamic stability and environmental friendliness, thereby facilitating the preparation and applying of the coating slurry. For example, the aqueous-solution-type binder may include at least one of aqueous-solution-type acrylic resin (for example, acrylic acid, methyl acrylic acid, sodium acrylate monomer homopolymer or copolymer with another comonomer), polyvinyl alcohol (PVA), isobutylene-maleic anhydride copolymer, and polyacrylamide.

Optionally, based on the total weight of the coating layer, a percentage of the non-granular binder in the coating layer is less than or equal to 2wt%. The three-dimensional skeleton structure, first filler, and the like in the coating layer in this application can form a stable spatial network structure, thereby allowing the separator to maintain high adhesion while reducing the amount of the binder.

In some embodiments, thickness of the coating layer may be less than or equal to 2 µm, optionally 0.5 µm to 1.5 µm. This is conducive to increasing the energy density of the secondary battery. In this application, the thickness of the coating layer refers to the thickness of the coating layer on one side of the porous substrate.

In some embodiments, thickness of the porous substrate may be less than or equal to 6 µm, optionally 3 µm to 5 µm. The coating layer in this application can significantly enhance the heat resistance of the separator, thereby allowing for selection of thinner porous substrate, which helps to increase the energy density of the secondary battery.

The porous substrate is not limited to any particular material in this application, and may be any well-known substrate with good chemical stability and mechanical stability. For example, the porous substrate may include at least one of porous polyolefin-based resin film (for example, at least one of polyethylene, polypropylene, and polyvinylidene fluoride), porous glass fiber, and porous nonwoven fabric. The porous substrate may be a single-layer film or a multilayer composite film. When the porous substrate is a multilayer composite film, each layer may be made of the same material or different materials.

In some embodiments, the separator may further include an adhesion layer, where the adhesion layer is disposed on at least part of a surface of the coating layer, and the adhesion layer includes a granular binder. The adhesion layer can not only prevent the coating layer from falling off and improve the safety performance of the secondary battery, but also improve an interface between the separator and an electrode and improve the cycling performance of the secondary battery.

Optionally, the granular binder includes at least one of acrylate monomer homopolymer or copolymer, acrylic monomer homopolymer or copolymer, and fluorine-containing olefin monomer homopolymer or copolymer. The comonomer includes but is not limited to at least one of the following: acrylate monomer, acrylic monomer, olefin monomer, halogen-containing olefin monomer, and fluoroether monomer.

Optionally, the granular binder includes a vinylidene fluoride-based polymer, for example, a homopolymer of vinylidene fluoride (VDF) monomer and/or a copolymer of vinylidene fluoride monomer with a comonomer. The comonomer may be at least one of olefin monomer, fluorine-containing olefin monomer, chlorine-containing olefin monomer, acrylate monomer, acrylic monomer, and fluoroether monomer. Optionally, the comonomer may include at least one of the following: trifluoroethylene (VF3), chlorotrifluoroethylene (CTFE), 1,2-difluoroethylene, tetrafluoroethylene (TFE), hexafluoropropylene (HFP), perfluoro(alkyl vinyl ether) (for example, perfluoro(methyl vinyl ether) PMVE, perfluoro(ethyl vinyl ether) PEVE, and perfluoro(propyl vinyl ether) PPVE), perfluoro(1,3-dioxole), and perfluoro(2,2-dimethyl-1,3-dioxole) (PDD).

In some embodiments, a machine-direction thermal shrinkage rate of the separator at 150°C for 1 h is less than or equal to 6%, optionally 0.5% to 4%.

In some embodiments, a transverse-direction thermal shrinkage rate of the separator at 150°C for 1 h is less than or equal to 6%, optionally 0.5% to 4%.

The separator in this application has a low thermal shrinkage rate in both the transverse and machine directions at the high temperature of 150°C, thereby improving the safety performance of the secondary battery.

In some embodiments, machine-direction tensile strength of the separator is greater than or equal to 2000 kg/cm², optionally 2500 kg/cm² to 4500 kg/cm².

In some embodiments, transverse-direction tensile strength of the separator is greater than or equal to 2000 kg/cm², optionally 2500 kg/cm² to 4500 kg/cm².

The separator in this application has high tensile strength in both the transverse and machine directions, allowing for low probability of damage to the separator when the secondary battery swells, thereby improving the safety performance of the secondary battery.

In some embodiments, infiltration length of the separator is greater than or equal to 30 mm, optionally 30 mm to 80 mm.

In some embodiments, infiltration velocity of the separator is greater than or equal to 3 mm/s, optionally 3 mm/s to 10 mm/s.

The separator in this application has good electrolyte infiltration and retention, thereby enhancing the ionic conductivity of the separator and the extractable capacity of the secondary battery.

In some embodiments, air permeability of the separator is less than or equal to 300 s/100 mL, optionally 100 s/100 mL to 230 s/100 mL. The separator in this application has good air permeability, thereby enhancing the ionic conductivity and the extractable capacity of the secondary battery.

In some embodiments, voltage breakdown strength of the separator is greater than or equal to 1 KV. The separator in this application has high voltage breakdown strength, thereby improving the safety performance of the secondary battery.

In this application, the average particle size of a material has a meaning well-known in the art, and can be tested using an instrument and a method known in the art. For example, the material or separator can be measured using a scanning electron microscope, a transmission electron microscope, or a particle size distribution instrument to obtain an image, multiple (for example, more than 10) test particles (for example, those containing the first filler, the second filler, or the like) can be randomly selected on the image, and the average value of the shortest diagonal lengths of the particles is taken as the average particle size.

In this application, the specific surface area of a material has a meaning well-known in the art, and can be tested using an instrument and a method known in the art. For example, the specific surface area can be measured according to GB/T 19587-2017 by using the nitrogen adsorption specific surface area analysis test method and calculated using the BET (BrunauerEmmett Teller) method. Optionally, the nitrogen adsorption specific surface area analysis test may be carried out by using the Tri-Star 3020 specific surface area and pore diameter analyzer from Micromeritics company in the United States.

In this application, the thermal shrinkage rate, tensile strength, and air permeability of the separator have the meanings well-known in the art, and can be tested using known methods in the art. For example, testing can be conducted according to GB/T 36363-2018.

In this application, the infiltration length and infiltration velocity of the separator have the meanings well-known in the art, and can be tested using known methods in the art. An example test method is as follows: cutting the separator into samples with a width of 5 mm and a length of 100 mm, fixing two ends of the sample and placing the sample horizontally; adding 0.5 mg of an electrolyte dropwise at the center of the sample; and after a specified time (1 min in this application) is reached, taking a photo and measuring the length of electrolyte diffusion, to obtain the infiltration length and infiltration velocity of the separator. To ensure the accuracy of the test results, multiple (for example, 5 to 10) samples can be tested, and the test results are obtained by calculating the average value. The electrolyte can be prepared in the following method: mixing ethylene carbonate (EC), ethyl methyl carbonate (EMC), and diethyl carbonate (DEC) at a mass ratio of 30:50:20 to obtain an organic solvent, and dissolving thoroughly dried LiPF₆ in the organic solvent to prepare an electrolyte with a concentration of 1 mol/L.

In this application, the voltage breakdown strength of the separator has the meaning well-known in the art, and can be tested using a known method in the art. For example, testing can be performed using a voltage resistance tester in accordance with GB/T 13542.2-2009 and GB/T 1408-2006. An example test method is as follows: cutting the separator into rectangular samples with a size of 450 mm × 650 mm, and performing testing using a voltage resistance tester. The test instrument may be a CS2671AX voltage resistance tester.

It should be noted that parameters (such as thickness) of the coating layer of the separator mentioned above are all for the coating layer on one side of the porous substrate. When the coating layer is disposed on both sides of the porous substrate, the coating layer is considered to fall within the protection scope of this application as long as parameters of the coating layer on either side satisfy this application.

### Preparation method

A second aspect of the embodiments of this application provides a preparation method of the separator according to the first aspect of the embodiments of this application. The method includes the following steps: providing a porous substrate; mixing a material constituting the three-dimensional skeleton structure and a first filler in a solvent at a predetermined ratio to prepare a coating slurry; and applying the coating slurry on at least one surface of the porous substrate to obtain the separator after drying; where the separator includes the porous substrate and a coating layer disposed on at least one surface of the porous substrate; the coating layer includes the three-dimensional skeleton structure and the first filler; at least part of the first filler is filled in the three-dimensional skeleton structure; and an average particle size of the first filler is less than or equal to 200 nm.

In some embodiments, the coating slurry further includes a second filler, where the average particle size of the first filler is denoted as d₁, and an average particle size of the second filler is denoted as d₂, satisfying d₂/d₁ > 1.

In some embodiments, the solvent used for preparing the coating slurry may be water, such as deionized water.

In some embodiments, the coating slurry may further include other components, for example, may further include a dispersant, a wetting agent, a binder, and the like.

In some embodiments, the material constituting the three-dimensional skeleton structure includes at least one of an organic material and an inorganic material. Optionally, the organic material includes at least one of nanocellulose, polytetrafluoroethylene nanofiber, and polyamide nanofiber. Optionally, the inorganic material includes at least one of halloysite nanotubes, nano-rod-shaped aluminum oxide, nano-rod-shaped boehmite, nano-rod-shaped silicon oxide, and glass fiber.

In some embodiments, a material constituting the three-dimensional skeleton structure includes nanocellulose.

In some embodiments, the nanocellulose can be obtained in the following method: providing cellulose powder with a whiteness of greater than or equal to 80%; mixing the obtained cellulose powder with a modification solution for reaction, followed by water washing to remove impurities; and adjusting the pH value of the resulting product to neutral, followed by grinding and cutting to obtain nanocellulose.

Optionally, the cellulose powder with a whiteness of greater than or equal to 80% is commercially available, or can be obtained in a chemical method (for example, acid hydrolysis, alkali treatment, or Tempo catalytic oxidation), a biological method (for example, enzyme treatment), a mechanical method (for example, ultrafine grinding, ultrasonic crushing, or high-pressure homogenization), or the like. A fibrous raw material for preparing the cellulose powder with a whiteness of greater than or equal to 80% may include at least one of plant fiber, such as cotton fiber (for example, cotton linter and kapok fiber), fibrilia (for example, sisal fiber, ramie fiber, jute fiber, flax fiber, hemp fiber, and abaca fiber), palm fiber, wood fiber, bamboo fiber, and grass fiber.

In some embodiments, the cellulose powder with a whiteness of greater than or equal to 80% can also be prepared in the following method: after loosening and removing impurities from the fibrous raw material, digesting the material with an alkali solution (for example, aqueous NaOH solution, with a concentration of 4wt% to 20wt%, optionally 5wt% to 15wt%), followed by the following processes in sequence: water washing (for example, for 3-6 times) for impurity removal, bleaching (for example, sodium hypochlorite and/or hydrogen peroxide may be used), acid washing for impurity removal, water washing for impurity removal, dehydrating, air drying, to obtain cellulose powder.

In some embodiments, the modification solution may be an acid solution (for example, aqueous sulfuric acid solution, aqueous boric acid solution, aqueous phosphoric acid solution, or aqueous acetic acid solution) or an alkali solution (for example, urea organic solvent solution). Optionally, the modification solution is an acid solution.

Optionally, a concentration of the acid solution may be 5wt% to 80wt%. When the modification solution is an aqueous sulfuric acid solution, a concentration of the acid solution may be 40wt% to 80wt%, thereby obtaining cellulose powder with sulfonic acid group. When the modification solution is an aqueous boric acid solution, a concentration of the acid solution may be 5wt% to 10wt%, thereby obtaining cellulose powder with boric acid group. When the modification solution is an aqueous phosphoric acid solution, a concentration of the acid solution may be 45wt% to 75wt%, thereby obtaining cellulose powder with phosphoric acid group. When the modification solution is an aqueous acetic acid solution, a concentration of the acid solution may be 40wt% to 80wt%, thereby obtaining cellulose powder with carboxylic acid group.

Optionally, the urea organic solvent solution is a urea xylene solution, thereby obtaining cellulose powder with amino group.

In some embodiments, optionally, a mass ratio of the cellulose powder to the modification solution may be 1:2.5 to 1:50, optionally 1:5 to 1:30.

When the modification solution is an aqueous sulfuric acid solution, a mass ratio of the cellulose powder to the acid solution may be 1:5 to 1:30. When the modification solution is an aqueous boric acid solution, a mass ratio of the cellulose powder to the acid solution may be 1:20 to 1:50. When the modification solution is an aqueous phosphoric acid solution, a mass ratio of the cellulose powder to the acid solution may be 1:5 to 1:30. When the modification solution is an aqueous acetic acid solution, a mass ratio of the cellulose powder to the acid solution may be 1:5 to 1:30. When the modification solution is a urea organic solvent solution, a mass ratio of the cellulose powder to the urea organic solvent solution may be 1:4 to 1:40.

In some embodiments, when the modification solution is an acid solution, the reaction may be carried out at a temperature not higher than 80°C, optionally at 30°C to 60°C, and the reaction time of the cellulose powder with the modification solution may be 0.5 h to 4 h, optionally 1 h to 3 h.

In some embodiments, when the modification solution is an alkali solution, the reaction may be carried out at a temperature of 100°C to 145°C, and the reaction time of the cellulose powder with the modification solution may be 1 h to 5 h.

In some embodiments, grinding can be performed using a grinder, and cutting can be performed using a high-pressure homogenizer. The grinding parameters (for example, the number of grinding times and grinding time) of the grinder and the cutting parameters of the high-pressure homogenizer can be adjusted to obtain nanocellulose with different average diameters and/or different average lengths.

In some embodiments, a coater can be used for applying the coating slurry. In this application, a model of the coater is not specially limited, for example, a commercially available coater can be used. The coater includes a gravure roller, and the gravure roller is used to transfer the slurry to the porous substrate.

In some embodiments, the coating slurry can be applied in a method such as transfer coating, rotary spraying, or dip coating.

In some embodiments, the method further includes the following step: applying a slurry containing a granular binder on at least part of a surface of the coating layer to create an adhesion layer after drying.

According to the preparation method of the separator in this application, the coating layer is obtained through one-time coating, greatly simplifying the production process of the separator.

For some raw materials used in the preparation method of the separator in this application and parameters such as percentages thereof, refer to the separator according to the first aspect of the embodiments of this application. Details are not described herein again.

Unless otherwise specified, all raw materials used in the preparation method of the separator in this application are commercially available.

### Secondary battery

A third aspect of the embodiments of this application provides a secondary battery.

Secondary batteries, also referred to as rechargeable batteries or storage batteries, are batteries whose active material can be activated for continuous use through charging after the batteries are discharged. Typically, a secondary battery includes an electrode assembly and an electrolyte. The electrode assembly includes a positive electrode plate, a negative electrode plate, and a separator. The separator is disposed between the positive electrode plate and the negative electrode plate, mainly to prevent short circuit between the positive electrode and the negative electrode and allow active ions to pass through.

The secondary battery is not limited to any particular type in this application. For example, the secondary battery may be a lithium-ion battery, a sodium-ion battery, or the like, and particularly, the secondary battery may be a lithium-ion secondary battery.

The secondary battery provided in the third aspect of the embodiments of this application includes the separator according to the first aspect of the embodiments of this application or a separator prepared by using the method according to the second aspect of the embodiments of this application, where the separator is sandwiched between the positive electrode plate and the negative electrode plate. Optionally, at least a side of the separator closer to the negative electrode plate has the coating layer of this application. In this way, the secondary battery in this application can achieve balance among high energy density, high thermal safety performance, long cycle life, and good kinetic performance.

### [Positive electrode plate]

In some embodiments, the positive electrode plate includes a positive electrode current collector and a positive electrode film layer disposed on at least one surface of the positive electrode current collector and including a positive electrode active material. For example, the positive electrode current collector has two opposite surfaces in its thickness direction, and the positive electrode film layer is disposed on either or both of the two opposite surfaces of the positive electrode current collector.

When the secondary battery in this application is a lithium-ion battery, the positive electrode active material may include but is not limited to at least one of lithium-containing transition metal oxide, lithium-containing phosphate, and their respective modified compounds. Examples of the lithium-containing transition metal oxide may include but are not limited to at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their respective modified compounds. Examples of the lithium-containing phosphate may include but are not limited to at least one of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and their respective modified compounds.

In some preferred embodiments, to further increase the energy density of the secondary battery, the positive electrode active material for lithium-ion batteries may include at least one of lithium transition metal oxides and their modified compounds with a general formula LiₐNi_{b}Co_{c}M_{d}OₑA_{f}, where 0.8 ≤ a ≤ 1.2, 0.5≤ b < 1, 0 < c < 1, 0 < d < 1, 1 ≤ e ≤ 2, 0 ≤ f ≤ 1, M is at least one selected from Mn, Al, Zr, Zn, Cu, Cr, Mg, Fe, V, Ti, and B, and A is at least one selected from N, F, S, and Cl.

For example, the positive electrode active material for lithium-ion batteries may include at least one of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

When the secondary battery in this application is a sodium-ion battery, the positive electrode active material may include but is not limited to at least one of sodium-containing transition metal oxide, a polyanionic material (such as phosphate, fluorophosphate, pyrophosphate, and sulfate), and a Prussian blue material.

For example, the positive electrode active material for sodium-ion batteries may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material with a general formula XₚM'_{q}(PO₄)ᵣOₓY₃₋ₓ. In the general formula XₚM'_{q}(PO₄)ᵣOₓY₃₋ₓ, 0 < p ≤ 4, 0 < q ≤ 2, 1 ≤ r ≤ 3, 0 ≤ x ≤ 2, X is at least one selected from H⁺, Li⁺, Na⁺, K⁺, and NH₄⁺, M' is a transition metal cation, optionally at least one of V, Ti, Mn, Fe, Co, Ni, Cu, and Zn, and Y is a halogen anion, optionally at least one of F, Cl, and Br.

In this application, the modified compounds of the above positive electrode active materials may be modified by doping and/or surface coating on the positive electrode active material.

In some embodiments, the positive electrode film layer further optionally includes a positive electrode conductive agent. The positive electrode conductive agent is not limited to a particular type in this application. For example, the positive electrode conductive agent includes at least one of superconducting carbon, conductive graphite, acetylene black, carbon black, Ketjen black, carbon dots, carbon nanotubes, graphene, and carbon nanofiber. In some embodiments, a mass percentage of the positive electrode conductive agent is less than or equal to 5wt% based on the total mass of the positive electrode film layer.

In some embodiments, the positive electrode film layer further optionally includes a positive electrode binder. The positive electrode binder is not limited to a particular type in this application. For example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. In some embodiments, a mass percentage of the positive electrode binder is less than or equal to 5wt% based on the total mass of the positive electrode film layer.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. For example, the metal material may include at least one of aluminum, aluminum alloy, nickel, nickel alloy, titanium, titanium alloy, silver, and silver alloy. For example, the polymer material matrix may include at least one of polypropylene (PP), polyethylene terephthalate (PET), polybutylene terephthalate (PBT), polystyrene (PS), and polyethylene (PE).

The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components into a solvent and stirring them until the mixture is uniform. The solvent may be but is not limited to N-methylpyrrolidone (NMP).

### [Negative electrode plate]

In some embodiments, the negative electrode plate includes a negative electrode current collector and a negative electrode film layer disposed on at least one surface of the negative electrode current collector and including a negative electrode active material. For example, the negative electrode current collector has two opposite surfaces in its thickness direction, and the negative electrode film layer is provided on either or both of the two opposite surfaces of the negative electrode current collector.

The negative electrode active material may be a negative electrode active material for secondary batteries well-known in the art. For example, the negative electrode active material may include but is not limited to at least one of natural graphite, artificial graphite, soft carbon, hard carbon, a silicon-based material, a tin-based material, and lithium titanate. The silicon-based material may include at least one of elemental silicon, silicon oxide, silicon-carbon composite, silicon-nitrogen composite, and a silicon alloy material. The tin-based material may include at least one of elemental tin, tin oxide, and a tin alloy material.

In some embodiments, the negative electrode film layer further optionally includes a negative electrode conductive agent. The negative electrode conductive agent is not limited to a particular type in this application. For example, the negative electrode conductive agent may include at least one of superconducting carbon, conductive graphite, acetylene black, carbon black, Ketjen black, carbon dots, carbon nanotubes, graphene, and carbon nanofiber. In some embodiments, a mass percentage of the negative electrode conductive agent is less than or equal to 5wt% based on the total mass of the negative electrode film layer.

In some embodiments, the negative electrode film layer further optionally includes a negative electrode binder. The negative electrode binder is not limited to a particular type in this application. For example, the negative electrode binder may include at least one of styrene-butadiene rubber (SBR), water-soluble unsaturated resin SR-1B, waterborne acrylic resin (for example, polyacrylic acid PAA, polymethylacrylic acid PMAA, and polyacrylic acid sodium PAAS), polyacrylamide (PAM), polyvinyl alcohol (PVA), sodium alginate (SA), and carboxymethyl chitosan (CMCS). In some embodiments, a mass percentage of the negative electrode binder is less than or equal to 5wt% based on the total mass of the negative electrode film layer.

In some embodiments, the negative electrode film layer further optionally includes another additive. For example, the another additive may include a thickener, for example, sodium carboxymethyl cellulose (CMC) or PTC thermistor material. In some embodiments, a mass percentage of the another additive is less than or equal to 2wt% based on the total mass of the negative electrode film layer.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. For example, the metal material may include at least one of copper, copper alloy, nickel, nickel alloy, titanium, titanium alloy, silver, and silver alloy. For example, the polymer material matrix may include at least one of polypropylene (PP), polyethylene terephthalate (PET), polybutylene terephthalate (PBT), polystyrene (PS), and polyethylene (PE).

The negative electrode film layer is typically formed by applying a negative electrode slurry onto the negative electrode current collector, followed by drying and cold pressing. The negative electrode slurry is typically formed by dispersing the negative electrode active material, the optional conductive agent, the optional binder, and the optional another additive in a solvent and stirring them to uniformity. The solvent may be but is not limited to N-methylpyrrolidone (NMP) or deionized water.

The negative electrode plate does not exclude additional functional layers other than the negative electrode film layer. For example, in some embodiments, the negative electrode plate described in this application further includes a conductive primer layer (for example, consisting of a conductive agent and a binder) disposed on the surface of the negative electrode current collector and sandwiched between the negative electrode current collector and the negative electrode film layer. In some other embodiments, the negative electrode plate of this application further includes a protection layer covering the surface of the negative electrode film layer.

### [Electrolyte]

In a charge and discharge process of the secondary battery, active ions intercalates and deintercalates between the positive electrode plate and the negative electrode plate. The electrolyte is between the positive electrode plate and the negative electrode plate to mainly conduct active ions. The electrolyte is not specifically limited to any particular type in this application, and may be selected depending on actual needs.

The electrolyte includes an electrolytic salt and a solvent. The electrolytic salt and solvent are not specifically limited to any types, and may be selected depending on actual needs.

When the secondary battery in this application is a lithium-ion battery, for example, the electrolytic salt may include but is not limited to at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluoro(dioxalato)phosphate (LiDFOP), and lithium tetrafluoro oxalato phosphate (LiTFOP).

When the secondary battery in this application is a sodium-ion battery, for example, the electrolytic salt may include but is not limited to at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bistrifluoromethanesulfonimide (NaTFSI), sodium trifluoromethanesulfonate (NaTFS), sodium difluoro(oxalato)borate (NaDFOB), sodium dioxalate borate (NaBOB), sodium difluorophosphate (NaPO₂F₂), sodium difluoro(dioxalato)phosphate (NaDFOP), and sodium tetrafluoro oxalato phosphate (NaTFOP).

In some embodiments, the solvent may include but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-gamma-butyrolactone (GBL), sulfolane (SF), methyl sulfonyl methane (MSM), ethyl methyl sulfone (EMS), and diethyl sulfone (ESE).

In some embodiments, the electrolyte further optionally includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature power performance of the battery.

In some embodiments, the positive electrode plate, the separator, and the negative electrode plate may be made into an electrode assembly through winding and/or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, for example, at least one of polypropylene (PP), polybutylene terephthalate (PBT), and polybutylene succinate (PBS).

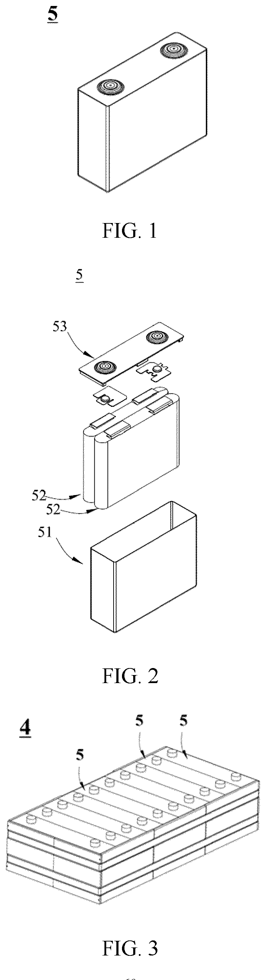

This application does not impose any special limitations on a shape of the secondary battery, and the secondary battery may be cylindrical, rectangular, or of any other shapes. FIG. 1 shows a secondary battery 5 of a rectangular structure as an example.

In some embodiments, as shown in FIG. 2, the outer package may include a housing 51 and a cover plate 53. The housing 51 may include a base plate and side plates connected to the base plate, and the base plate and the side plates enclose an accommodating cavity. The housing 51 has an opening connected to the accommodating cavity, and the cover plate 53 is configured to cover the opening to seal the accommodating cavity. The positive electrode plate, the negative electrode plate, and the separator may be made into an electrode assembly 52 through winding and/or lamination. The electrode assembly 52 is packaged in the accommodating cavity. The electrolyte infiltrates the electrode assembly 52. The secondary battery 5 may include one or more electrode assemblies 52, and the quantity may be adjusted as required.

The preparation method of the secondary battery in this application is well known. In some embodiments, a positive electrode plate, a separator, a negative electrode plate, and an electrolyte may be assembled into a secondary battery. For example, the positive electrode plate, the separator, and the negative electrode plate may be made into an electrode assembly through winding and/or lamination; and the electrode assembly is put in an outer package which is filled with electrolyte after drying, followed by processes such as vacuum packaging, standing, formation, and shaping, to obtain a secondary battery.

In some embodiments of this application, such secondary batteries of this application may be assembled into a battery module. The battery module may include a plurality of secondary batteries, and a specific quantity may be adjusted based on application and capacity of the battery module.

FIG. 3 is a schematic diagram of a battery module 4 as an example. As shown in FIG. 3, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened through fasteners.

Optionally, the battery module 4 may further include a housing with an accommodating space, and the plurality of secondary batteries 5 are accommodated in the accommodating space.

In some embodiments, the battery modules may be further assembled into a battery pack, and a quantity of battery modules included in the battery pack may be adjusted based on application and capacity of the battery pack.

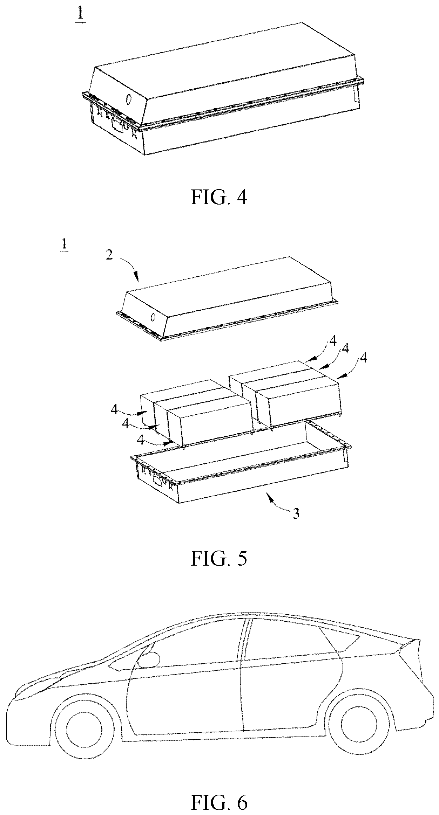

FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3. The upper box body 2 is configured to be engaged with the lower box body 3 to form an enclosed space for accommodating the battery modules 4. The plurality of battery modules 4 may be arranged in the battery box in any manner.

### Electric apparatus

A fourth aspect of the embodiments of this application provides an electric apparatus. The electric apparatus includes at least one of the secondary battery, battery module, or battery pack according to this application. The secondary battery, the battery module, or the battery pack may be used as a power source for the electric apparatus or an energy storage unit of the electric apparatus. The electric apparatus may include but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, or an energy storage system.

The secondary battery, the battery module, or the battery pack may be selected for the electric apparatus based on requirements for using the electric apparatus.

FIG. 6 is a schematic diagram of an electric apparatus as an example. This electric apparatus is a battery electric vehicle, a hybrid electric vehicle, a plug-in hybrid electric vehicle, or the like. To satisfy requirements of the electric apparatus for high power and high energy density, a battery pack or a battery module may be used.

In another example, the electric apparatus may be a mobile phone, a tablet computer, a notebook computer, or the like. Such electric apparatus is generally required to be light and thin and may use a secondary battery as its power source.

### Examples

Content disclosed in this application is described in detail in the following examples. These examples are only for illustrative purposes because various modifications and changes made without departing from the scope of the content disclosed in this application are apparent to persons skilled in the art. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

### Preparation of nanocellulose C1

Cotton linter was loosened with impurities removed using a cotton slitter, then digested with 5wt% aqueous NaOH solution at 150°C for 2 h, followed by the following processes in sequence: water washing (for 3 times) for impurity removal, bleaching with sodium hypochlorite, acid washing with dilute hydrochloric acid for impurity removal, water washing (for 1 time) for impurity removal, dehydrating, and air drying, to obtain cotton cellulose powder with a whiteness of greater than or equal to 85%.

The obtained cotton cellulose powder (1 kg) was mixed with 60wt% aqueous sulfuric acid solution (30 kg) for reaction at 55°C to 60°C for 1.5 h; and after the reaction, the resulting product went through water washing (for 3 times) for impurity removal, filtering, and acid-washing for impurity removal, then had the pH value adjusted to neutral with 10wt% aqueous NaOH solution, then was ground with a grinder, and went through nanoscale cutting using a high-pressure homogenizer to obtain nanocellulose C1 with sulfonic acid modified group, with an average length of 350 nm and an average diameter of 18 nm and a molar ratio of the sulfonic acid group to the hydroxyl group was 5:3.

### Preparation of nanocellulose C2 to C4

Nanocellulose C2 to C4 were prepared using a method similar to that for nanocellulose C1, with differences as shown in Table 1. During the preparation process, the grinding parameters of the grinder and the cutting parameters of the high-pressure homogenizer could be adjusted to obtain nanocellulose with different average diameters and/or different average lengths.

### Preparation of nanocellulose C5

Cotton linter was loosened with impurities removed using a cotton slitter, then digested with 5wt% aqueous NaOH solution at 150°C for 2 h, followed by the following processes in sequence: water washing (for 3 times) for impurity removal, bleaching with sodium hypochlorite, acid washing with dilute hydrochloric acid for impurity removal, water washing (for 1 time) for impurity removal, dehydrating, and air drying, to obtain cotton cellulose powder with a whiteness of greater than or equal to 85%. At 10°C, the obtained cotton cellulose powder was mixed with 20wt% aqueous NaOH solution, stirred for 2 h, filtered, and washed twice with water to obtain cellulose powder.

50 g of the obtained cellulose powder and 200 g of urea were placed in a three-necked reactor with an oil-water separator. After dissolution of the urea, 5 g of xylene was added, and the mixture was stirred and gradually heated up to 137°C. After reaction for 4 h until the reaction was terminated, the resulting product was washed with water (for 3 times), filtered, and dried to obtain cellulose carbamate.

The obtained cellulose carbamate was dissolved in 5wt% aqueous NaOH solution to obtain a uniform cellulose carbamate solution. Then, the resulting solution was ground with a grinder, and went through nanoscale cutting using a high-pressure homogenizer to obtain nanocellulose C5 with amino modified group, with an average length of 350 nm and an average diameter of 18 nm and a molar ratio of the amino group to the hydroxyl group was 4:3.

### Preparation of nanocellulose C6

Unmodified nanocellulose was used, with an average length of 350 nm and an average diameter of 18 nm, where the product model was CNWS-50 and purchased from Zhongkeleiming (Beijing) Technology Co. Ltd. The nanocellulose could be further treated with a grinder and/or high-pressure homogenizer to obtain nanocellulose with different average diameters and/or different average lengths.

The molar ratio of the modified group to the hydroxyl group in nanocellulose C1 to C5 could be measured in the following method: the hydroxyl values (the number of milligrams of potassium hydroxide equivalent to the content of the hydroxyl group per gram of sample) of raw materials cellulose and nanocellulose C1 to C5 were tested by using the phthalic anhydride method in accordance with GB/T 12008.3-2009, and the obtained values were measured in mg KOH/g, and then converted to mmol/g as the content of the hydroxyl group. The content of the modified group (that is, the content of the modified hydroxyl group) could be obtained by subtracting the content of the hydroxyl group in nanocellulose C1 to C5 from the content of the hydroxyl group in raw material cellulose, and then the molar ratio of the modified group to the hydroxyl group was calculated.

**Table 1**

| No | Acid | Concentratio n of modification solution | Reactio n time (h) | Modified group | Molar ratio of modifie d group to hydroxy l group | Average diamete r (nm) | Averag e length (nm) | Length-diamete r ratio |
|---|---|---|---|---|---|---|---|---|
| C1 | H₂SO₄ | 60% | 1.5 | Sulfonic acid group | 5:3 | 18 | 350 | 19.4 |
| C2 | Acetic acid | 60% | 1.5 | Carboxyl group | 6:3 | 18 | 350 | 19.4 |
| C3 | H₃PO₄ | 70% | 3.0 | Boric acid group | 4:3 | 18 | 350 | 19.4 |
| C4 | H₃BO ₃ | 7% | 3.0 | Phosphori c acid group | 4:3 | 18 | 350 | 19.4 |

### Example 1

### Preparation of separator

A PE porous substrate was provided, with a thickness of 5.2 µm.

Preparation of coating slurry: The nanocellulose C1 prepared above, a first filler, a second filler, and a binder aqueous-solution-type polyacrylic acid were mixed to uniformity at a mass ratio of 16.0:62.5:20.0:1.5 in an appropriate amount of solvent deionized water to obtain a coating slurry.

The first filler was a mixture of aluminum oxide primary particles (with an average particle size of 50 nm, and a percentage of 12.5wt% based on the total weight of the coating layer) and aluminum oxide secondary particles (with an average particle size of 100 nm, and a percentage of 50wt% based on the total weight of the coating layer); and percentages of particles in α crystalline form, θ crystalline form, γ crystalline form, and η crystalline form in the first filler were 1.5wt%, 70.7wt%, 27.3wt%, and 0.5wt% respectively based on the total weight of the first filler. The second filler was aluminum oxide primary particles (with an average particle size of 240 nm), and the crystalline form of the second filler was mainly α crystalline form, with a weight percentage of above 99.5% based on the total weight of the second filler.

Coating: The prepared coating slurry was applied on both surfaces of the PE porous substrate using a coater, followed by processes of drying and slitting to obtain a separator. The thickness of the coating layer on one side of the PE porous substrate was 1.0 µm.

### Preparation of positive electrode plate

A positive electrode active material LiNi_{0.8}Co_{0.1}Mn_{0.1}O₂ (NCM811), a conductive agent carbon black (Super P), and a binder polyvinylidene fluoride (PVDF) were mixed to uniformity at a mass ratio of 96.2:2.7:1.1 in a solvent N-methylpyrrolidone (NMP) to obtain a positive electrode slurry. The positive electrode slurry was applied on a positive electrode current collector aluminum foil, followed by processes such as drying, cold pressing, slitting, and cutting to obtain a positive electrode plate.

### Preparation of negative electrode plate

A negative electrode active material artificial graphite, a conductive agent carbon black (Super P), a binder styrene-butadiene rubber (SBR), and sodium carboxymethyl cellulose (CMC) were mixed to uniformity at a mass ratio of 96.4:0.7:1.8:1.1 in an appropriate amount of solvent deionized water to obtain a negative electrode slurry. The negative electrode slurry was applied on a negative electrode current collector copper foil, followed by processes of drying, cold pressing, slitting, and cutting to obtain a negative electrode plate.

### Preparation of electrolyte

Ethylene carbonate (EC) and ethyl methyl carbonate (EMC) were mixed at a mass ratio of 30:70 to obtain an organic solvent. Then, fully dried LiPF₆ was dissolved in the organic solvent to prepare an electrolyte with a concentration of 1 mol/L.

### Preparation of secondary battery

The positive electrode plate, the separator, and the negative electrode plate were sequentially stacked and wound to obtain an electrode assembly. The electrode assembly was placed into an outer package and dried. Then the electrolyte was injected, and processes such as vacuum packaging, standing, formation, and shaping were performed to obtain a secondary battery.

### Examples 2 to 4

Secondary batteries were prepared using a method similar to that in example 1, with differences lying in the particle size of the first filler in the preparation of the separator. Detailed parameters are given in Table 2.

### Examples 5 to 14

Secondary batteries were prepared using a method similar to that in example 1, with differences lying in the types and/or amounts of nanocellulose and first filler in the preparation of the separator. Detailed parameters are given in Table 2.

### Example 15

Secondary batteries were prepared using a method similar to that in example 1, with differences lying in that in the preparation of the separator, the first filler was aluminum oxide secondary particles with the average particle size of 100 nm, and the percentages of particles in α crystalline form, θ crystalline form, γ crystalline form, and η crystalline form in the first filler were 1.5wt%, 70.7wt%, 27.3wt%, and 0.5wt% respectively based on the total weight of the first filler.

### Example 16

Secondary batteries were prepared using a method similar to that in example 1, with differences lying in that in the preparation of the separator, the first filler was aluminum oxide primary particles. The average particle size of the aluminum oxide primary particles was 50 nm, and the percentages of particles in α crystalline form, θ crystalline form, γ crystalline form, and η crystalline form in the first filler were 1.5wt%, 70.7wt%, 27.3wt%, and 0.5wt% respectively based on the total weight of the aluminum oxide primary particles.

### Comparative example 1

Secondary batteries were prepared using a method similar to that in example 1, with differences lying in the preparation process of the separator.

A PE porous substrate was provided, with a thickness of 5.2 µm.

Preparation of coating slurry: Aluminum oxide primary particles (with an average particle size of 700 nm, and a percentage of particles in α crystalline form above 99.5%) and a binder were mixed at a mass ratio of 94:6 and dissolved in deionized water to obtain a coating slurry.

Coating: The prepared coating slurry was applied on both surfaces of the PE porous substrate using a coater, followed by processes of drying and slitting to obtain a separator. The thickness of the coating layer on one side of the PE porous substrate was 1.8 µm.

### Tests

### (1) Test for thermal shrinkage rate of separator

Sample preparation: The separator prepared above was punched with a punching machine into samples with a width of 50 mm and a length of 100 mm, 5 parallel samples were placed on an A4 paper and fixed, and then the A4 paper with the samples was placed on corrugated paper with a thickness of 1 mm to 5 mm.

Sample testing: The A4 paper placed on the corrugated paper was put into a blast oven, with the temperature of the blast oven set to 150°C, after the temperature reached a preset temperature and that temperature was maintained for 30 minutes, timing was started, and after the preset time (1 hour for this application) was reached, the length and width of the separator were measured, and the values were denoted as a and b respectively.

Calculation of thermal shrinkage rate: machine-direction (MD) thermal shrinkage rate = [(100 - a)/100] × 100%, transverse-direction (TD) thermal shrinkage rate = [(50 - b)/50] × 100%, and the average value of 5 parallel samples was taken as the test result.

### (2) Test for ionic conductivity of separator

The ionic conductivity of the separator was obtained in an alternating current impedance spectroscopy test. Specifically, the separator was cut into a small round sheet with a specified area, dried and placed between two stainless steel electrodes; after absorbing a sufficient amount of electrolyte, the separator was sealed to form a button cell; and the alternating current impedance spectroscopy test was conducted using an electrochemical workstation to obtain the ionic conductivity of the separator. The electrochemical workstation could be a CHI 660C electrochemical workstation from Shanghai CH Instruments, with an alternating current signal frequency range of 0.01 Hz to 1 MHz, and a sine wave potential amplitude of 5 mV. For accuracy, an average value of 5 parallel samples was taken as the test result.

The electrolyte used was prepared as follows: Ethylene carbonate (EC), ethyl methyl carbonate (EMC), and diethyl carbonate (DEC) were mixed at a mass ratio of 30:50:20 to obtain an organic solvent. Then, fully dried LiPF₆ was dissolved in the organic solvent to prepare an electrolyte with a concentration of 1 mol/L.

### (3) Hot box test for secondary battery

At 25°C, the secondary battery was charged to 4.2 V at a constant current of 1C, charged to a current of less than or equal to 0.05C at a constant voltage, and left standing for 5 min. Then each secondary battery was tested in a DHG-9070A DHG series high-temperature oven with a clamp, with the temperature increased from room temperature to 80°C±2°C at a velocity of 5°C/min. That temperature was maintained for 30 min. Then the temperature was increased at a velocity of 5°C/min, with the temperature kept for 30 min for every increase of 5°C. During the temperature increase process, the surface temperature change of the secondary battery was monitored. When the temperature started to rise sharply, the corresponding oven temperature was the hot-box failure temperature of the secondary battery. Higher hot-box failure temperature of the secondary battery indicates better thermal safety performance of the secondary battery. For accuracy, an average value of 5 parallel samples was taken as the test result.

### (4) Cycling performance test for secondary battery

At 25°C, the secondary battery was charged to 4.2 V at a constant current of 1C and charged to a current of less than or equal to 0.05C at a constant voltage. At this point, the secondary battery was fully charged, and a charge capacity at this point was recorded as a charge capacity of the first cycle. The secondary battery was left standing for 5 min and discharged to 2.8 V at a constant current of 1C. This was one charge and discharge cycle, and a discharge capacity at this point was recorded as a discharge capacity of the first cycle. The secondary battery was subjected to the charge and discharge cycling test according to the foregoing method, and a discharge capacity of each cycle was recorded. Capacity retention rate (%) of secondary battery after 1000 cycles at 25°C = discharge capacity of 1000th cycle/discharge capacity of first cycle × 100%. For accuracy, an average value of 5 parallel samples was taken as the test result.

As can be seen from Table 2, provision of the coating layer containing nanocellulose (constituting the three-dimensional skeleton structure) and first filler with an average particle size of less than or equal to 200 nm on both surfaces of the porous substrate of the separator can allow the separator to achieve balance between low thermal shrinkage rate and high ionic conductivity, and allow the secondary battery to achieve balance between high thermal safety performance and good cycling performance.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

**Table 2**

| No. | Nanocellulose | | First filler | | | | Second filler | | | | Binder | Separator | | | Battery | |
|---|---|---|---|---|---|---|---|---|---|---|---|---|---|---|---|---|
| | Type | Percentage (wt%) | Type | Morphology | Average particle size (nm) | Percentage (wt%) | Type | Morphology | Average particle size (nm) | Percentage (wt%) | Percentage (wt%) | Ionic conductivity (ms/cm²) | MD thermal shrinkage rate | TD thermal shrinkage rate | Hot-box failure temperature (°C) | Capacity retention rate after 1000 cycles |
| Example 1 | C1 | 16 | Aluminum oxide | Primary particle+secondary particle | 50+100 | 12.5+50 | Aluminum oxide | Primary particle | 240 | 20 | 1.5 | 0.988 | 2.00% | 2.10% | 153.0 | 89.00% |
| Example 2 | C1 | 16 | Aluminum oxide | Primary particle+secondary particle | 20+100 | 12.5+50 | Aluminum oxide | Primary particle | 240 | 20 | 1.5 | 0.952 | 1.50% | 1.80% | 155.0 | 86.50% |
| Example 3 | C1 | 16 | Aluminum oxide | Primary particle+secondary particle | 30+100 | 12.5+50 | Aluminum oxide | Primary particle | 240 | 20 | 1.5 | 0.973 | 2.00% | 2.30% | 153.0 | 87.00% |
| Example 4 | C1 | 16 | Aluminum oxide | Primary particle+secondary particle | 75+100 | 12.5+50 | Aluminum oxide | Primary particle | 240 | 20 | 1.5 | 0.978 | 3.50% | 3.80% | 149.0 | 85.00% |
| Example 5 | C1 | 5 | Aluminum oxide | Primary particle+secondary particle | 50+100 | 12.5+61 | Aluminum oxide | Primary particle | 240 | 20 | 1.5 | 0.931 | 1.50% | 1.60% | 156.0 | 83.00% |
| Example 6 | C1 | 8 | Aluminum oxide | Primary particle+secondary particle | 50+100 | 12.5+58 | Aluminum oxide | Primary particle | 240 | 20 | 1.5 | 0.958 | 1.80% | 1.90% | 154.0 | 85.50% |
| Example 7 | C1 | 24 | Aluminum oxide | Primary particle+secondary particle | 50+100 | 12.5+42 | Aluminum oxide | Primary particle | 240 | 20 | 1.5 | 0.976 | 3.50% | 3.80% | 148.0 | 87.30% |
| Example 8 | C1 | 40 | Aluminum oxide | Primary particle+secondary particle | 50+100 | 12.5+26 | Aluminum oxide | Primary particle | 240 | 20 | 1.5 | 0.968 | 5.00% | 5.20% | 145.0 | 84.80% |
| Example 9 | C1 | 16 | Aluminum oxide | Primary particle+secondary particle | 50+100 | 12.5+70 | / | / | / | 0 | 1.5 | 0.965 | 1.80% | 2.00% | 152.0 | 84.50% |
| Example 10 | C2 | 16 | Aluminum oxide | Primary particle+secondary particle | 50+100 | 12.5+50 | Aluminum oxide | Primary particle | 240 | 20 | 1.5 | 0.965 | 1.80% | 2.00% | 153.5 | 85.00% |
| Example 11 | C3 | 16 | Aluminum oxide | Primary particle+secondary particle | 50+100 | 12.5+50 | Aluminum oxide | Primary particle | 240 | 20 | 1.5 | 0.978 | 3.80% | 4.20% | 148.0 | 88.50% |
| Example 12 | C4 | 16 | Aluminum oxide | Primary particle+secondary particle | 50+100 | 12.5+50 | Aluminum oxide | Primary particle | 240 | 20 | 1.5 | 0.975 | 3.50% | 3.80% | 149.0 | 88.30% |
| Example 13 | C5 | 16 | Aluminum oxide | Primary particle+secondary particle | 50+100 | 12.5+50 | Aluminum oxide | Primary particle | 240 | 20 | 1.5 | 0.982 | 2.20% | 2.50% | 151.5 | 88.50% |
| Example 14 | C6 | 16 | Aluminum oxide | Primary particle+secondary particle | 50+100 | 12.5+50 | Aluminum oxide | Primary particle | 240 | 20 | 1.5 | 0.989 | 5.70% | 6.00% | 144.0 | 89.30% |
| Example 15 | C1 | 16 | Aluminum oxide | Secondary particle | 100 | 62.5 | Aluminum oxide | Primary particle | 240 | 20 | 1.5 | 0.981 | 1.70% | 1.90% | 153.5 | 86.00% |
| Example 16 | C1 | 16 | Aluminum oxide | Primary particle | 50 | 62.5 | Aluminum oxide | Primary particle | 240 | 20 | 1.5 | 0.987 | 2.30% | 2.50% | 150.8 | 88.00% |
| Comparativ e example 1 | / | / | / | / | / | / | Aluminum oxide | Primary particle | 700 | 94 | 6 | 0.939 | 13.20% | 16.20% | 141.0 | 81.20% |

## Claims

1. A separator, comprising a porous substrate and a coating layer disposed on at least one surface of the porous substrate, wherein the coating layer comprises a three-dimensional skeleton structure and a first filler, at least part of the first filler is filled in the three-dimensional skeleton structure, and an average particle size of the first filler is less than or equal to 200 nm.

2. The separator according to claim 1, wherein the average particle size of the first filler is 15 nm to 180 nm, optionally 30 nm to 150 nm.

3. The separator according to claim 1 or 2, wherein the first filler comprises at least one of primary particle and secondary particle;
optionally, the first filler comprises a combination of primary particle and secondary particle;
optionally, based on a total weight of the first filler, a percentage of the first filler of primary particle morphology is less than a percentage of the first filler of secondary particle morphology;
optionally, based on the total weight of the first filler, the percentage of the first filler of primary particle morphology is less than or equal to 30wt%;
optionally, an average particle size of the first filler of primary particle morphology is 15 nm to 80 nm, more optionally 30 nm to 65 nm; and
optionally, an average particle size of the first filler of secondary particle morphology is 50 nm to 200 nm, more optionally 55 nm to 150 nm.

4. The separator according to any one of claims 1 to 3, wherein BET specific surface area of the first filler is greater than or equal to 25 m²/g, optionally 30 m²/g to 65 m²/g.

5. The separator according to any one of claims 1 to 4, wherein
based on a total weight of the coating layer, a percentage of the first filler is greater than or equal to 50wt%, optionally 60wt% to 90wt%; and/or
based on the total weight of the coating layer, a percentage of the three-dimensional skeleton structure is 5wt% to 40wt%, optionally 8wt% to 25wt%.

6. The separator according to any one of claims 1 to 5, wherein the first filler comprises at least one of inorganic particle and organic particle; wherein
optionally, the inorganic particle comprises at least one of boehmite, aluminum oxide, barium sulfate, magnesium oxide, magnesium hydroxide, silicon-oxygen compound, tin dioxide, titanium oxide, calcium oxide, zinc oxide, zirconium oxide, yttrium oxide, nickel oxide, hafnium dioxide, cerium oxide, zirconium titanate, barium titanate, and magnesium fluoride, and more optionally, the inorganic particle comprises at least one of boehmite, aluminum oxide, barium sulfate, magnesium oxide, silicon-oxygen compound, titanium oxide, zinc oxide, cerium oxide, and barium titanate; and
optionally, the organic particle comprises at least one of polystyrene particle, polypropylene wax particle, melamine formaldehyde resin particle, phenolic resin particle, polyester particle, polyimide particle, polyamideimide particle, polyaramide particle, polyphenylene sulfide particle, polysulfone particle, polyethersulfone particle, polyether-ether-ketone particle, and polyaryl-ether-ketone particle.

7. The separator according to any one of claims 1 to 6, wherein the first filler comprises inorganic particles, and a crystalline form of the inorganic particles comprises at least one of θ crystalline form, γ crystalline form, and η crystalline form;
optionally, the crystalline form of the inorganic particles comprises at least one of θ crystalline form and γ crystalline form;
optionally, based on a total weight of the inorganic particles in the first filler, a percentage of the inorganic particles in θ crystalline form is greater than or equal to 50wt%, more optionally 55wt% to 84wt%;
optionally, based on the total weight of the inorganic particles in the first filler, a percentage of the inorganic particles in γ crystalline form is greater than or equal to 10wt%, more optionally 15wt% to 44wt%; and
optionally, based on the total weight of the inorganic particles in the first filler, a percentage of the inorganic particles in η crystalline form is less than or equal to 5wt%, more optionally less than or equal to 2.5wt%.

8. The separator according to any one of claims 1 to 7, wherein the three-dimensional skeleton structure is formed by a fibrous substance, and morphology of the fibrous substance optionally comprises at least one of a rod shape, a tube shape, a bar shape, and a fiber shape.

9. The separator according to any one of claims 1 to 8, wherein
an average diameter of a material constituting the three-dimensional skeleton structure is less than or equal to 40 nm, optionally 10 nm to 35 nm; and/or
an average length of the material constituting the three-dimensional skeleton structure is 100 nm to 600 nm, optionally 200 nm to 500 nm; and/or
a length-diameter ratio of the material constituting the three-dimensional skeleton structure is 5 to 60, optionally 10 to 30.

10. The separator according to any one of claims 1 to 9, wherein a material constituting the three-dimensional skeleton structure comprises at least one of an organic material and an inorganic material;
optionally, the organic material comprises at least one of nanocellulose, polytetrafluoroethylene nanofiber, and polyamide nanofiber, and optionally, the nanocellulose comprises at least one of cellulose nanofibrils, cellulose nanocrystals, and bacterial nanocellulose; and
optionally, the inorganic material comprises at least one of halloysite nanotubes, nano-rod-shaped aluminum oxide, nano-rod-shaped boehmite, nano-rod-shaped silicon oxide, and glass fiber.

11. The separator according to any one of claims 1 to 10, wherein a material constituting the three-dimensional skeleton structure comprises nanocellulose, and the nanocellulose comprises at least one of unmodified nanocellulose and modified nanocellulose;
optionally, the modified nanocellulose comprises a modified group, wherein the modified group comprises at least one of an amino group, a carboxyl group, an aldehyde group, a sulfonic acid group, a boric acid group, and a phosphoric acid group, and more optionally, comprises at least one of a sulfonic acid group, a boric acid group, and a phosphoric acid group; and
optionally, the modified nanocellulose comprises a hydroxyl group and a modified group, wherein a molar ratio of the modified group to the hydroxyl group is 1:4 to 4:1, more optionally 2:3 to 7:3.

12. The separator according to any one of claims 1 to 11, wherein a material constituting the three-dimensional skeleton structure comprises a sulfonic acid group, and based on a total weight of the material constituting the three-dimensional skeleton structure, a percentage of element sulfur in the material constituting the three-dimensional skeleton structure is greater than or equal to 0.1wt%, optionally 0.2wt% to 0.5wt%.

13. The separator according to any one of claims 1 to 12, wherein the coating layer further comprises a second filler, wherein at least part of the second filler is embedded into the coating layer, the average particle size of the first filler is denoted as d₁, and an average particle size of the second filler is denoted as d₂, satisfying d₂/d₁ > 1.

14. The separator according to claim 13, wherein
the first filler comprises at least one of primary particle and secondary particle, an average particle size of the first filler of primary particle morphology is denoted as d₁₁, and an average particle size of the first filler of secondary particle morphology is denoted as d₁₂; wherein
3.0 ≤ d₂/d₁₁ ≤ 10.0, and optionally, 3.5 ≤ d₂/d₁₁ ≤ 8.0; and/or
1.2 ≤ d₂/d₁₂ ≤ 6.0, and optionally, 2.0 ≤ d₂/d₁₂ ≤ 5.5.

15. The separator according to claim 13 or 14, wherein the second filler satisfies at least one of the following conditions (1) to (7):
(1) the second filler has a primary particle morphology;
(2) the average particle size of the second filler is 120 nm to 350 nm, optionally 150 nm to 300 nm;
(3) BET specific surface area of the second filler is less than or equal to 20 m²/g, optionally 6 m²/g to 15 m²/g;
(4) the second filler comprises at least one of inorganic particle and organic particle;
(5) the second filler comprises inorganic particles of primary particle morphology, and a crystalline form of the inorganic particles of primary particle morphology comprises at least one of α crystalline form and γ crystalline form, and optionally comprises α crystalline form;
(6) the second filler comprises inorganic particles of primary particle morphology, and a crystalline form of the inorganic particles of primary particle morphology comprises α crystalline form, wherein based on a total weight of the inorganic particles of primary particle morphology in the second filler, a percentage of the inorganic particles in α crystalline form is greater than or equal to 70wt%, optionally 85wt% to 100wt%; and
(7) based on a total weight of the coating layer, a percentage of the second filler is less than or equal to 30wt%, optionally 5wt% to 25wt%.

16. The separator according to any one of claims 1 to 15, wherein the coating layer further comprises a non-granular binder; wherein
optionally, the non-granular binder comprises an aqueous-solution-type binder; and
optionally, based on a total weight of the coating layer, a percentage of the non-granular binder in the coating layer is less than or equal to 2wt%.

17. The separator according to any one of claims 1 to 16, wherein
thickness of the porous substrate is less than or equal to 6 µm, optionally 3 µm to 5 µm; and/or
thickness of the coating layer is less than or equal to 2 µm, optionally 0.5 µm to 1.5 µm.

18. The separator according to any one of claims 1 to 17, wherein the separator further comprises an adhesion layer, wherein the adhesion layer is disposed on at least part of a surface of the coating layer, and the adhesion layer comprises a granular binder; and
optionally, the granular binder comprises at least one of acrylate monomer homopolymer or copolymer, acrylic monomer homopolymer or copolymer, and fluorine-containing olefin monomer homopolymer or copolymer.

19. The separator according to any one of claims 1 to 18, wherein the separator satisfies at least one of the following conditions (1) to (8):
(1) a machine-direction thermal shrinkage rate of the separator at 150°C for 1 his less than or equal to 6%, optionally 0.5% to 4%;
(2) a transverse-direction thermal shrinkage rate of the separator at 150°C for 1 h is less than or equal to 6%, optionally 0.5% to 4%;
(3) machine-direction tensile strength of the separator is greater than or equal to 2000 kg/cm², optionally 2500 kg/cm² to 4500 kg/cm²;
(4) transverse-direction tensile strength of the separator is greater than or equal to 2000 kg/cm², optionally 2500 kg/cm² to 4500 kg/cm²;
(5) infiltration length of the separator is greater than or equal to 30 mm, optionally 30 mm to 80 mm;
(6) infiltration velocity of the separator is greater than or equal to 3 mm/s, optionally 3 mm/s to 10 mm/s;
(7) air permeability of the separator is less than or equal to 300 s/100 mL, optionally 100 s/100 mL to 230 s/100 mL; and
(8) voltage breakdown strength of the separator is greater than or equal to 1 KV.

20. A preparation method of the separator according to any one of claims 1 to 19, comprising the following steps: providing a porous substrate; mixing a material constituting a three-dimensional skeleton structure and a first filler in a solvent at a predetermined ratio to prepare a coating slurry; and applying the coating slurry on at least one surface of the porous substrate to obtain a separator after drying; wherein the separator comprises the porous substrate and a coating layer disposed on at least one surface of the porous substrate; the coating layer comprises the three-dimensional skeleton structure and the first filler; at least part of the first filler is filled in the three-dimensional skeleton structure; and an average particle size of the first filler is less than or equal to 200 nm.

21. The method according to claim 20, wherein the coating slurry further comprises a second filler, wherein the average particle size of the first filler is denoted as d₁, and an average particle size of the second filler is denoted as d₂, satisfying d₂/d₁ > 1.

22. A secondary battery, comprising the separator according to any one of claims 1 to 19 or a separator prepared by using the method according to claim 20 or 21.

23. An electric apparatus, comprising the secondary battery according to claim 22.
